(19) Europäisches Patentamt
European Patent Office
Office européen des brevets

(11) **EP 1 410 488 B1**

(12) **FASCICULE DE BREVET EUROPEEN**

(45) Date de publication et mention
de la délivrance du brevet:
**02.06.2010 Bulletin 2010/22**

(21) Numéro de dépôt: **02790198.2**

(22) Date de dépôt: **16.07.2002**

(51) Int Cl.:
***H02M 5/297*** *(2006.01)*

(86) Numéro de dépôt international:
**PCT/FR2002/002532**

(87) Numéro de publication internationale:
**WO 2003/010875 (06.02.2003 Gazette 2003/06)**

(54) **DISPOSITIF DE CONVERSION D'ENERGIE**

ENERGIEUMWANDLUNGSEINRICHTUNG

ENERGY CONVERTING DEVICE

(84) Etats contractants désignés:
**AT BE BG CH CY CZ DE DK EE ES FI FR GB GR
IE IT LI LU MC NL PT SE SK TR**

(30) Priorité: **25.07.2001 FR 0109944**

(43) Date de publication de la demande:
**21.04.2004 Bulletin 2004/17**

(73) Titulaires:
• **CENTRE NATIONAL DE
LA RECHERCHE SCIENTIFIQUE (CNRS)
75016 Paris (FR)**
• **C.I.R.T.E.M.
31319 Labege Cedex (FR)**
• **INSTITUT NATIONAL POLYTECHNIQUE
DE TOULOUSE (I.N.P.T.)
31029 Toulouse Cédex 4 (FR)**

(72) Inventeurs:
• **MEYNARD, Thierry
F-31240 L'Union (FR)**

• **LEFEUVRE, Elie
F-12100 Millau (FR)**

(74) Mandataire: **Habasque, Etienne J. Jean-François
et al
Cabinet Lavoix
2, place d'Estienne d'Orves
75441 Paris Cedex 09 (FR)**

(56) Documents cités:
**US-A- 5 737 201**

• **KWON B-H ET AL: "Novel topologies of AC
choppers" IEE PROCEEDINGS: ELECTRIC
POWER APPLICATIONS, INSTITUTION OF
ELECTRICAL ENGINEERS, GB, vol. 143, no. 4, 10
juillet 1996 (1996-07-10), pages 323-330,
XP006006397 ISSN: 1350-2352 cité dans la
demande**

**Description**

La présente invention concerne un dispositif de conversion réversible d'énergie électrique à découpage entre une ou plusieurs sources de tension alternative et une ou plusieurs sources de courant alternatif.

Des solutions existantes, à base de contacteurs ou de thyristors et de transformateurs, permettent d'effectuer ce type de conversion.

Cependant, ces solutions ne permettent qu'un réglage discret, donc imprécis et leur réponse est lente.

De plus, ces solutions nécessitent des transformateurs à prises intermédiaires pour réaliser le réglage de la tension. Le coût de l'ensemble se trouve donc être élevé.

D'autres solutions pour réaliser des dispositifs de conversion d'énergie utilisent des associations de condensateurs et d'interrupteurs permettant de commuter le courant entre les différents condensateurs et ainsi de transformer le signal.

Une telle utilisation de condensateurs commutés pour procéder à une conversion d'un signal est une technique classique de l'électronique.

Un réseau de semi-conducteur faisant office d'interrupteurs et de condensateurs disposés en matrice entre une source de tension et une source de courant, est utilisé dans le dispositif décrit dans la demande de brevet français, déposée le 26 mai 2000, sous le n° 00 06 786 par la demanderesse.

Cependant, le dispositif décrit dans la demande de brevet français 00 06 786, ne permet pas d'effectuer une conversion entre une source de tension alternative et une source de courant alternatif.

Un dispositif effectuant théoriquement une conversion entre une source de tension alternative et une source de courant alternatif, est décrit dans l'article de D.-H.KWON, D.-D.MIN et J.-H.KIM, intitulé « Novel topologies of AC choppers », publié dans IEE Proceedings on Electr. Power Appl., pages 323-330, volume 143, n° 4 de juillet 1996.

Cependant, cet article décrit de manière purement théorique un cas particulier présentant trois sources de courant alternatif et fait abstraction de problèmes d'implantation pratiques des circuits électroniques de moyenne et forte puissances.

En particulier, il apparaît que les circuits électroniques de ce document, présentent des risques de surtension importants à faible puissance et critiques à haute puissance notamment supérieure à 750 kW.

L'invention vise à remédier à ce problème en permettant une conversion réversible d'énergie électrique entre une ou plusieurs sources de tension alternative et une ou plusieurs sources de courant alternatif, fiable pour toutes les puissances.

A cet effet, l'invention a pour objet un dispositif de conversion réversible d'énergie électrique connectable entre au moins une source de tension alternative d'entrée et au moins une charge formant source de courant alternatif de sortie, chaque source de tension alternative d'entrée présentant une borne d'alimentation et une borne de neutre, le dispositif comportant au moins un bloc de commutation, adapté pour être associé à une source de courant alternatif de sortie et comportant une borne d'entrée à laquelle est connectable la borne d'alimentation de la source de tension alternative d'entrée, au moins une borne de référence et une borne de sortie à laquelle est connectable ladite charge for mant source de courant alternative de sortie, ledit bloc comportant également une matrice de commutation formée de condensateurs et de cellules de commutation, lesquelles cellules sont contrôlées individuellement par des moyens de commande de leur fonctionnement, **caractérisé en ce que** le ou chaque bloc de commutation comporte une unique borne de référence qui est à un potentiel de référence différent du potentiel de ladite borne de neutre de ladite source et en ce qu'il comporte des moyens de maintien permanent, à un signe constant ou nul, de la différence de potentiel entre ladite borne d'entrée et ladite borne de référence du ou de chaque bloc de commutation.

Suivant d'autres caractéristiques des exemples de réalisation préférés:

- la matrice du ou de chaque bloc comporte au moins un étage comportant au moins un rang de cellules de commutation, agencées à raison d'une seule cellule de commutation pour chaque étage d'un même rang, chaque cellule de commutation étant composée de deux éléments formant interrupteur, le ou chaque étage définissant deux groupes d'interrupteurs reliés en série et ladite matrice de commutation définissant alors deux groupes extrêmes d'interrupteurs, chaque cellule de commutation étant associée à un condensateur dimensionné pour maintenir entre les bornes homologues des deux interrupteurs de chaque cellule de commutation, une tension de charge égale à une fraction de la tension de la source de tension alternative d'entrée, décroissante en fonction de leur rang à partir de cette source, les condensateurs d'un même rang étant connectés en série entre les deux groupes extrêmes d'interrupteurs.

- tous les interrupteurs de chaque cellule de commutation sont unidirectionnels en tension et bidirectionnels en courant ;

- tous les interrupteurs de chaque cellule de commutation sont formés de composants électroniques qui sont unidirectionnels en tension et unidirectionnels en courant ;

- tous les interrupteurs de chaque cellule de commutation sont formés de composants électroniques tous identiques, et en ce que chaque interrupteur est constitué d'interrupteurs élémentaires identiques connectés en série dont le nombre est fonction de la tension maximale applicable entre ses bornes ;

- il comporte des moyens de pilotage des moyens de commande comportant des moyens de traitement d'un signal de référence pour délivrer en sortie une pluralité de signaux secondaires de référence, et des moyens de transmission de chaque signal secondaire de référence à tous les moyens de commande des cellules de commutation d'un même étage de toutes les matrices de tous les blocs du dispositif ;

- lesdits moyens de traitement sont adaptés pour délivrer une pluralité de signaux secondaires de référence qui sont des fonctions affines par morceau du signal de référence, chaque signal secondaire de référence d'un étage étant à chaque instant de valeur supérieure ou égale à la valeur d'un signal secondaire de référence d'un étage plus proche de la source de tension ;

- lesdits moyens de pilotage comportent des moyens de génération d'un signal de synchronisation pour délivrer en sortie une pluralité de signaux secondaires de synchronisation, et des moyens de transmission de chaque signal secondaire de synchronisation à tous les moyens de commande des cellules de commutation d'un même rang de toutes les matrices de tous les blocs du dispositif ;

- il comporte un unique bloc de commutation et est connectable à une seule source de tension alternative d'entrée dont ladite borne de neutre est accessible pour permettre une connexion et qui est associée à une seule charge formant source de courant alternatif de sortie, et en ce qu'il comprend en outre un premier condensateur connectable entre ladite borne de neutre de ladite source et une borne de sortie de la charge et un second condensateur connectable entre la borne de référence dudit bloc de commutation et la borne de sortie de la charge ;

- il comporte un unique bloc de commutation et est connectable à une seule source de tension alternative d'entrée dont ladite borne de neutre est accessible pour permettre une connexion et qui est associée à une seule charge formant source de courant alternatif de sortie, et il comporte un bloc de décalage comportant une borne d'entrée adaptée pour être reliée à ladite borne de neutre de ladite source, une borne de référence reliée à la borne de référence du bloc de commutation, et une borne de sortie connectable à la borne de sortie de la charge, ledit bloc de décalage permettant de modifier le potentiel de la borne de sortie connectable à une borne de sortie de la charge ;

- il comporte un premier et un second blocs de commutation et est connectable à une seule source de tension alternative d'entrée dont ladite borne de neutre est accessible pour permettre une connexion et qui est associée à une seule charge formant source de courant alternatif de sortie, les bornes de référence des deux blocs de commutation étant reliées entre elles, le premier bloc de commutation étant adapté pour être connecté par sa borne d'entrée à la borne d'alimentation de ladite source, le second bloc de commutation étant adapté pour être connecté par sa borne d'entrée à la borne de neutre de ladite source, ledit dispositif étant en outre adapté pour la connexion de ladite charge entre les bornes de sortie des deux blocs de commutation ;

- les moyens de maintien permanent, à un signe constant ou nul de la différence de potentiel entre la dite borne d'entrée et ladite borne de référence comportent, associés au ou à chaque bloc de commutation, des moyens d'inhibition comportant des moyens d'évaluation du signe de la différence de potentiel entre ladite borne d'entrée et ladite borne de neutre de la source, adaptés pour délivrer en sortie un signal d'inhibition du bloc de commutation, et le ou chaque bloc de commutation est adapté pour relier ensemble sa borne d'entrée, sa borne de référence et sa borne de sortie, lors de la réception dudit signal d'inhibition ;

- lesdits moyens d'inhibition sont adaptés pour délivrer ledit signal d'inhibition lorsque la différence de potentiel entre ladite borne d'entrée et ladite borne de neutre de la source est négative, la matrice de commutation étant en outre formée de composants électroniques orientés de sorte que ledit bloc de commutation supporte uniquement une tension positive ou nulle ;

- lesdits moyens d'inhibition sont adaptés pour délivrer ledit signal d'inhibition lorsque la différence de potentiel entre ladite borne d'entrée et ladite borne de neutre de la source est positive, la matrice de commutation étant en outre formée de composants électroniques orientés de sorte que ledit bloc de commutation supporte uniquement une tension négative ou nulle ;

- il est connectable à au moins deux sources de tension alternative d'entrée dont les bornes de neutre sont toutes reliées entre elles, associées au même nombre de charges formant sources de courant alternatif de sortie et dont des bornes de sortie sont également toutes reliées entre elles et il comporte une pluralité de blocs de commutation, les bornes de référence des blocs de commutation étant toutes reliées entre elles ;

- lesdites bornes de neutre desdites sources sont accessibles pour permettre une connexion, et il comporte un bloc de décalage comportant une borne d'entrée adaptée pour être reliée auxdites bornes de neutre, une borne de référence reliée à l'ensemble des bornes de référence des blocs de commutation et une borne de sortie connectable à l'ensemble des bornes de sortie des charges formant source de courant alternatif de sortie, ledit bloc de décalage permettant de modifier le potentiel de la borne de sortie connectable aux bornes de sortie des charges ;

- les moyens de maintien permanent, à un signe constant ou nul de la différence de potentiel entre la dite borne d'entrée et ladite borne de référence comportent, associés au ou à chaque bloc de commutation, des moyens d'inhibition comportant des moyens de comparaison de la différence de potentiel entre les bornes d'entrée et une borne de potentiel commun à tous lesdits blocs de commutation, telle que les bornes de neutre des sources, les bornes de sortie des charges ou les bornes de référence, adaptés pour délivrer en sortie des signaux d'inhibition des blocs de commutation et le ou chaque bloc de commutation est adapté pour relier ensemble sa borne d'entrée, sa borne de référence et sa borne de sortie, lors de la réception dudit signal d'inhibition ;

- lesdits moyens d'inhibition sont adaptés pour délivrer un signal d'inhibition uniquement au bloc dont la différence de potentiel entre les bornes d'entrée et une borne de potentiel commun à tous lesdits blocs de commutation, telle que les bornes de neutre des sources, les bornes de sortie des charges ou les bornes de référence, est la plus faible, les matrices de commutation étant en outre formées de composants électroniques orientés de sorte que lesdits blocs supportent uniquement une tension positive ou nulle ;

- lesdits moyens d'inhibition sont adaptés pour délivrer un signal d'inhibition uniquement au bloc dent la différence de potentiel entre les bornes d'entrée et une borne de potentiel commun à tous lesdits blocs de commutation, telle que les bornes de neutre des sources, les bornes de sortie des charges ou les bornes de référence, est la plus grande, les matrices de commutation étant en outre formées de composants électroniques orientés de sorte que lesdits blocs supportent uniquement une tension négative ou nulle ;

- il est adapté pour être connecté à trois sources de tension alternative d'entrée formant les trois phases d'un réseau d'alimentation en énergie électrique triphasé ;

- chaque matrice de chaque bloc de commutation comporte un unique condensateur et une unique cellule de commutation.

L'invention sera mieux comprise à la lecture de la description qui va suivre, donnée uniquement à titre d'exemple et faite en se référant aux dessins, sur lesquels :

- la Fig.1 est un schéma bloc de principe d'un dispositif de conversion selon l'invention ;
- la Fig.2 est un schéma électrique de principe d'un bloc de commutation ;
- les Figs.3, 4 et 5 sont des schémas blocs détaillant chacun la réalisation d'un dispositif selon l'invention, dans le cas particulier de la connexion à une unique source de tension alternative d'entrée ;
- la Fig.6 est un schéma bloc détaillant un dispositif de conversion d'énergie selon l'invention dans le cas particulier de trois sources de tension alternatives d'entrée ;
- les Figs.7 et 8 sont des schémas électriques de principe d'une matrice de commutation mise en oeuvre dans l'invention dans le cas où elle comporte deux étages et deux rangs, détaillant en outre un ensemble de commande de ce dispositif ;
- la Fig.9 est une représentation de l'allure des signaux de référence du dispositif décrit en référence aux figures 6 à 8 ;
- la Fig.10 est une représentation de l'allure des signaux de commande du dispositif décrit en référence aux figures 6 à 8;
- la Fig.11 est une représentation de l'allure de la tension entre la borne d'entrée et la borne de référence d'un bloc de commutation du dispositif décrit en référence aux figures 6 à 8;
- la Fig.12 est une représentation de l'allure des tensions de sortie des blocs de commutation du dispositif décrit en référence aux figures 6 à 8; et
- la Fig.13 est une représentation de l'allure des courants de sortie des blocs de commutation du dispositif décrit en référence aux figures 6 à 8.

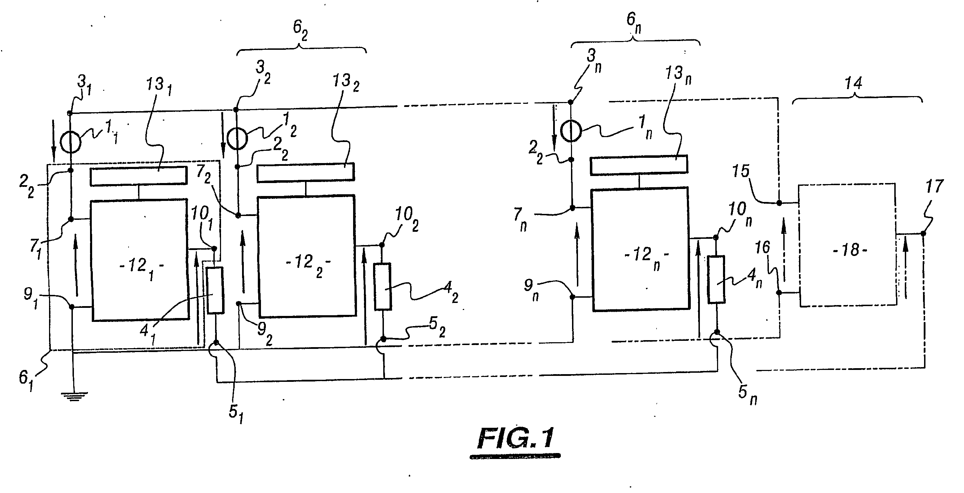

Sur la figure 1 est représenté un dispositif de conversion d'énergie selon l'invention.

Ce dispositif est connecté à une pluralité de sources de tension alternative d'entrée $1_1$ à $1_n$, constituées par exemple par les différentes phases d'un réseau d'alimentation polyphasé.

Les sources de tension alternative d'entrée $1_1$ à $1_n$ sont toutes déphasées entre elles. Ainsi, si le système dispose de n sources de tension alternative d'entrée, elles sont déphasées les unes par rapport aux autres de $\dfrac{2\Pi}{n}$.

Ces sources de tension alternative d'entrée $1_1$ à $1_n$ comportent chacune une borne d'alimentation $2_1$ à $2_n$ et une borne de neutre $3_1$ à $3_n$, lesquelles bornes de neutre $3_1$ à $3_n$ peuvent être ou ne pas être accessibles. Elles sont associées à des charges $4_1$ à $4_n$ par l'intermédiaire de blocs de commutation $6_1$ à $6_n$ intégrés au dispositif de conversion d'énergie. Les charges $4_1$ à $4_n$ sont des éléments dipolaires, constitués par exemple de résistances en série avec des inductances, et font office de sources de courant. Elles présentent chacune une borne de sortie $5_1$ à $5_n$.

Chacun des blocs de commutation $6_1$ à $6_n$ comporte une borne d'entrée $7_1$ à $7_n$ connectée à la borne d'alimentation $2_1$ à $2_n$ de la source de tension $1_1$ à $1_n$ qui lui est associée.

Chacun des blocs $6_1$ à $6_n$ comporte en outre une unique borne de référence $9_1$ à $9_n$ et une borne de sortie $10_1$ à $10_n$. Il comprend également une matrice de commutation $12_1$ à $12_n$ et des moyens d'inhibition $13_1$ à $13_n$ associés, adaptés pour relier ensemble la borne d'entrée $7_j$, la borne de référence $9_j$ et la borne de sortie $10_j$ du bloc, inhibant ainsi le bloc considéré.

Dans le cas où le dispositif comporte au moins deux sources de tension alternative d'entrée $1_1$ à $1_n$, chacune associée à un bloc de commutation $6_1$ à $6_n$, les bornes de neutre $3_1$ à $3_n$ des sources $1_1$ à $1_n$ sont toutes reliées ensemble à un même potentiel.

Par exemple, ce potentiel est le neutre du réseau d'alimentation correspondant aux sources de tension alternative d'entrée $1_1$ à $1_n$.

De plus, les bornes de référence $9_1$ à $9_n$ de tous les blocs de commutation $6_1$ à $6_n$ sont reliées entre elles et constituent un potentiel de référence commun. Les bornes de sortie $5_1$ à $5_n$ des charges $4_1$ à $4_n$ sont également toutes reliées entre elles à un même potentiel.

Enfin, les moyens d'inhibition $13_1$ à $13_n$ comportent des moyens de comparaison des tensions existantes entre les bornes d'entrée $7_1$ à $7_n$ et une borne de potentiel commun pour tous les blocs $6_1$ à $6_n$ telle que les bornes de référence $9_1$ à $9_n$, les bornes de sortie $5_1$ à $5_n$ ou les bornes de neutre $3_1$ à $3_n$.

Sur la figure 1, ainsi que sur les autres figures, les moyens d'inhibition $13_1$ à $13_n$ sont représentés délocalisés au niveau des blocs de commutation $6_1$ à $6_n$. Cependant, ces circuits peuvent également être regroupés en un circuit central d'inhibition comportant des moyens de comparaison uniques et contrôlant tous les blocs $6_1$ à $6_n$.

Dans le cas où les bornes de neutre $3_1$ à $3_n$ sont accessibles, le dispositif de conversion comporte avantageusement un bloc de décalage 14 dont l'architecture est identique à celle des blocs de commutation sans toutefois être associé à une source de tension alternative d'entrée.

La borne d'entrée 15 est alors reliée à l'ensemble des bornes de neutre $3_1$ à $3_n$ des sources $1_1$ à $1_n$.

Le bloc de décalage 14 comporte également une borne de référence 16 et une borne de sortie 17. Il est constitué d'une matrice de commutation 18 identique aux matrices $12_1$ à $12_n$ des blocs de commutation $6_1$ à $6_n$.

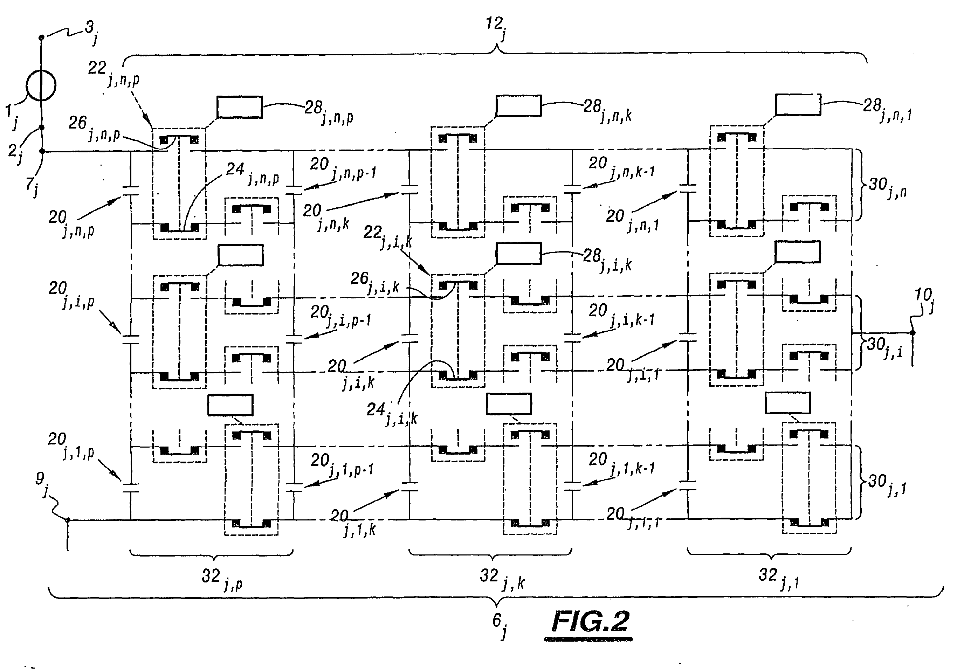

La borne de référence 16 est reliée aux bornes de référence $9_1$ à $9_n$ des blocs de commutation $6_1$ à $6_n$ et la borne de sortie 17 est reliée aux bornes de sortie $5_1$ à $5_n$ des charges $4_1$ à $4_n$, ainsi que cela est décrit en référence aux figures 2,7 et 8.

Le bloc de décalage 14 permet de décaler le potentiel des bornes de sortie $5_1$ à $5_n$ de charges $4_1$ à $4_n$, ainsi que cela est décrit en référence aux figures 2, 7 et 8.

Le dispositif de conversion est ainsi adapté à la nature des charges $4_1$ à $4_n$.

Sur la figure 2 est représentée l'architecture d'une matrice de commutation $12_j$ telle que celles utilisées dans l'invention.

Le bloc de commutation $6_j$ comporte une borne d'entrée $7_j$ à laquelle est connectée la borne d'alimentation $2_j$ d'une source de tension alternative $1_j$, une borne de sortie $10_j$ et une borne de référence $9_j$.

Le bloc de commutation $6_j$ comporte une matrice de commutation $12_j$ formée de condensateurs $20_{j,1,1}$

à $20_{j,n,p}$ et de cellules de commutation $22_{j,1,1}$ à $22_{j,n,p}$.

Chaque cellule de commutation $22_{j,i,k}$, est constituée de deux interrupteurs $24_{j,i,k}$ et $26_{j,i,k}$, et, est reliée pour son pilotage, à des moyens de contrôlé $28_{j,i,k}$ qui lui sont spécifiques.

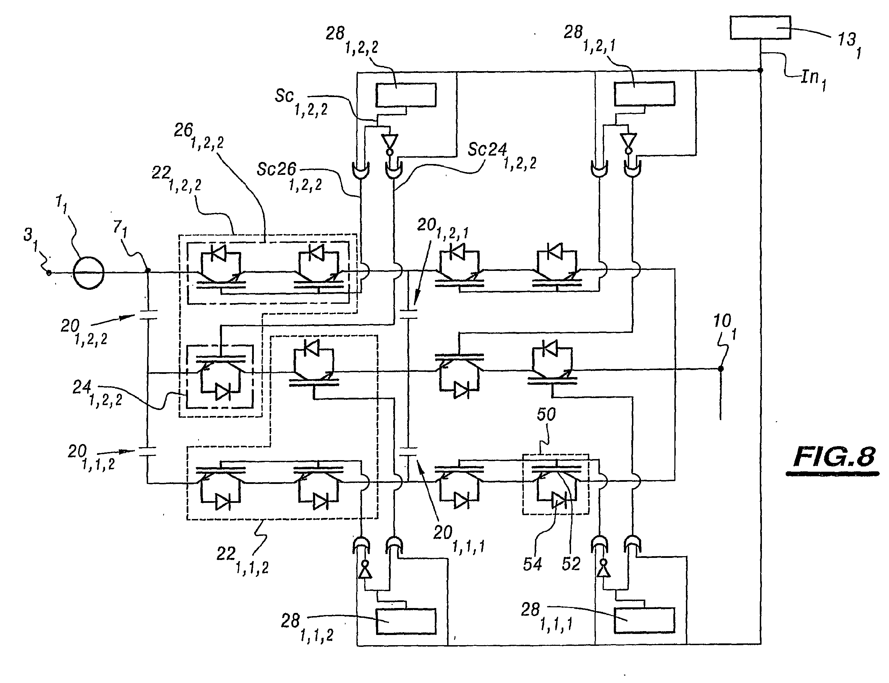

Dans ce dispositif, les interrupteurs sont unidirectionnels en tension et bidirectionnels en courant et les composants électroniques formant les interrupteurs $24_{j,i,k}$ et $26_{j,i,k}$ des cellules de commutation $22_{j,1,1}$ à $22_{j,n,p}$, sont unidirectionnels en courant et en tension, ainsi que cela est décrit en référence à la figure 8.

L'ensemble des condensateurs $20_{j,i,k}$ et des cellules de commutation $22_{j,i,k}$ formant la matrice $12_j$ est ordonné en n étages $30_{j,1}$ à $30_{j,n}$ et en p rangs $32_{j,1}$ à $32_{j,p}$.

Eventuellement, chaque matrice $12_j$ comporte un seul étage $30_{j,1,1}$ et un seul rang $32_{j,1,1}$. Dans ce cas, la matrice $12_j$ est constituée d'une seule cellule de commutation $22_{j,1,1}$ et d'un seul condensateur $20_{j,1,1}$.

Les n étages de la matrice $12_j$ définissent n + 1 groupes d'interrupteurs.

Le premier groupe d'interrupteurs est constitué des interrupteurs $24_{j,1,1}$ à $24_{j,1,p}$, des p cellules de commutation du premier étage, connectés en série. Le (n+1)-ème groupe d'interrupteurs est constitué des interrupteurs $26_{j,n,1}$ à $26_{j,n,p}$, des p cellules de commutation du n-ème étage, connectés en série. Le i-ème groupe d'interrupteurs, avec $1<i\leq n$, est constitué des interrupteurs $24_{j,i,1}$ à $24_{j,i,p}$, des p cellules de commutation du i-ème étage et des interrupteurs $26_{j,i-1,1}$ à $26_{j,i-1,p}$, des p cellules de commutation du (i-1)-ème étage, connectés alternativement en série.

Tous les groupes d'interrupteurs sont reliés par une de leurs extrémités à la borne de sortie $10_j$ du bloc de commutation $6_j$.

La matrice $12_j$ du bloc de commutation $6_j$ définit en outre deux groupes extrêmes d'interrupteurs. Le premier est relié par une extrémité à la borne de sortie $10_j$ et par l'autre extrémité à la borne de référence $9_j$. Le (n+1)-ème est relié par une extrémité à la borne de sortie $10_j$ et par l'autre extrémité à la borne d'entrée $7_j$.

Entre deux rangs successifs $32_{j,k}$ et $32_{j,k+1}$, n condensateurs de rang k, $20_{j,1,k}$ à $20_{j,n,k}$, sont connectés en série à raison de un par étage. Ainsi, au i-ème étage, le condensateur $20_{j,i,k}$ est connecté d'une part au i-ème groupe d'interrupteurs, d'autre part au (i+1)-ème groupe d'interrupteurs.

Chaque condensateur $20_{j,i,k}$ est adapté pour maintenir entre ses bornes une tension de charge, fonction croissante de son rang k et représentant une fraction de la tension partielle de la source de tension $1_j$.

L'ensemble des blocs de commutation $6_1$ à $6_n$ mis en oeuvre dans un dispositif de conversion selon l'invention, ainsi que le bloc de décalage 14, sont constitués de la même manière que le bloc de commutation $6_j$ décrit en référence à la figure 2.

De plus, dans un même dispositif, tous les blocs de commutation $6_1$ à $6_n$ comportent une matrice $12_1$ à $12_n$ comportant le même nombre d'étages et de rangs et donc le même nombre de cellules de commutation et de condensateurs.

On va maintenant expliciter le fonctionnement d'un tel dispositif.

Chacun des blocs de commutation $6_1$ à $6_n$ a deux modes de fonctionnement imposés par les moyens d'inhibition $13_1$ à $13_n$.

Dans un premier mode de fonctionnement, un bloc de commutation $6_j$ convertit le signal d'entrée en un signal de sortie de même nature et de même fréquence.

Dans ce premier mode de fonctionnement, les cellules de commutation $22_{j,i,k}$ des blocs de commutation $6_1$ à $6_n$ sont commandées de manière à maintenir les deux interrupteurs de chaque cellule dans des états opposés.

La tension entre la borne d'entrée $7_j$ et la borne de référence $9_j$ est alors de signe constant. Son signe est déterminé par l'orientation des composants dans la matrice $12_j$.

Par exemple, une certaine orientation des composants, décrite plus loin en référence à la figure 8, aboutit à une différence de potentiel entre la borne d'entrée $7_j$ et la borne de référence $9_j$, constamment positive.

Dans ce cas, lorsque les moyens de comparaison des moyens d'inhibition $13_j$ détectent que la tension entre la borne d'entrée $7_j$ et une borne de potentiel commun à tous les blocs $6_1$ à $6_n$ telle que la borne de neutre $3_1$ à $3_n$, la borne de sortie $5_1$ à $5_n$ ou la borne de référence $9_1$ à $9_n$, est inférieure aux tensions entre les bornes d'entrée de tous les autres blocs du système, et la même borne de potentiel commun, les moyens d'inhibition $13_j$ délivrent au bloc de commutation $6_j$ un signal d'inhibition.

Le bloc de commutation bascule alors dans un second mode de fonctionnement, appelé « inhibition de bloc de commutation », l'ensemble des interrupteurs formant les cellules de commutation d'un bloc de commutation $6_j$ sont fermés court-circuitant ainsi la borne d'entrée $7_j$, la borne de référence $9_j$ et la borne de sortie $10_j$ du bloc de commutation $6_j$.

Dans le cas où l'orientation des composants impose une tension entre les bornes $7_j$ et $9_j$ constamment négative durant les phases de commutation, le critère d'inhibition s'inverse.

Du fait des conditions d'inhibition d'un bloc de commutation décrites précédemment, il ne peut y avoir qu'un bloc de commutation fonctionnant à la fois en mode d'inhibition sur l'ensemble des blocs de commutation $6_1$ à $6_n$ du dispositif de conversion.

Dans le cas où le dispositif comporte un bloc de décalage, celui-ci fonctionne de la même manière qu'un bloc de commutation non inhibé.

Les sources de tension alternative d'entrée $1_1$ à $1_n$ étant déphasées entre elles, chacun des blocs de commutation $6_1$ à $6_n$ bascule en mode inhibé pendant une période de $\dfrac{2\Pi}{n}$.

Dans un tel dispositif, la mise au même potentiel de toutes les bornes de référence $9_1$ à $9_n$ et de toutes les bornes de neutre $3_1$ à $3_n$, les périodes d'inhibition commandées par les moyens d'inhibition et l'orientation des composants, assurent le maintien de la tension entre la borne d'entrée $7_1$ à $7_n$ et la borne de référence $9_1$ à $9_n$ de chacun des blocs de commutation, à un signe constant ou nul.

Ces tensions, appelées respectivement $Vb_1$ à $Vb_n$ restent directement liées aux tensions des sources $1_1$ à $1_n$ appelées $V1_1$ à $V1_n$.

En effet, il apparaît qu'à tout moment, la relation $Vb_1 - Vb_3 = V1_1 - V1_3$ est vérifiée. Cette relation se vérifie pour tous les blocs par permutation circulaire.

De même, les tensions composées de sortie des blocs appelées $V10_1 - V10_j$ sont également sinusoïdales et génèrent dans les charges $4_1$ à $4_n$ des courants sinusoïdaux de même fréquence que les sources de tension alternative d'entrée $1_1$ à $1_n$ et déphasés entre eux de $\dfrac{2\Pi}{n}$.

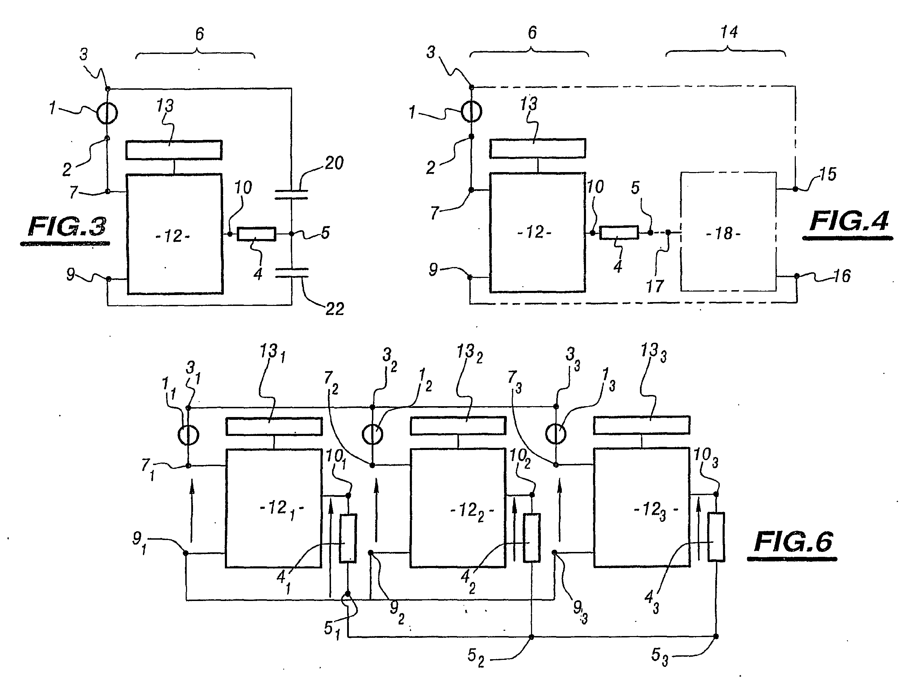

Sur la figure 3 est définie l'architecture d'un dispositif selon l'invention connecté à une seule source de tension alternative d'entrée 1.

Le dispositif est connecté à une charge 4 associée à une source de tension alternative d'entrée 1 dont la borne de neutre 3 est accessible et comprend un bloc de commutation 6.

Le bloc de commutation 6 comporte une borne d'entrée 7 connectée à la borne d'alimentation 2 de la source de tension alternative d'entrée 1. Il comporte en outre une borne de référence 9, une borne de sortie 10 reliée à la charge 4 et une matrice de commutation 12 associée à des moyens d'inhibition 13.

Dans cette configuration, le dispositif comporte en outre un premier condensateur 20 connecté entre la borne de neutre 3 de la source 1 et la borne de sortie 5 de la charge 4 et un second condensateur 22 connecté entre la borne de sortie 5 de la charge 4 et la borne de référence 9 du bloc de commutation 6.

On obtient ainsi un circuit adapté pour maintenir constamment une différence de potentiel entre le point de référence 9 du bloc de commutation 6 et la borne de neutre 3 de la source de tension alternative d'entrée 1.

De plus, dans cette configuration, les moyens d'inhibition 13 du bloc de commutation 6 comportent des moyens d'évaluation du signe de la différence de potentiel entre la borne d'entrée 7 et la borne de neutre 3, ce qui correspond à la différence de potentiel aux bornes de la source 1.

Lorsque cette tension est d'un signe donné, soit par exemple positive ou nulle, le bloc 6 fonctionne en bloc de commutation. Si cette tension est de signe opposé, dans l'exemple négative, les moyens d'inhibition 13 commandent la matrice de commutation 12 de manière à ce que tous les interrupteurs soient fermés court-circuitant ainsi la borne d'entrée 7, la borne de référence 9 et la borne de sortie 10, le bloc 6 bascule alors en mode inhibé.

Avantageusement, pour reconstituer l'intégralité d'un signal sinusoïdal, le circuit doit comporter des moyens de décalage du signal de la source de tension alternative d'entrée 1 afin que la tension d'entrée soit toujours positive ou nulle.

Sur la figure 4, est représenté le cas d'un dispositif selon l'invention connecté à une seule source de tension alternative d'entrée 2 dont la borne de neutre 3 est accessible et comportant un bloc de décalage 14.

Ainsi que cela a été décrit en référence à la figure 3, le dispositif est connecté à la source de tension alternative d'entrée 1 associée à la charge 4 servant de source de courant de sortie, et comporte le bloc de commutation 6.

Le bloc de commutation 6 comprend la matrice 12 associée aux moyens d'inhibition 13.

Le dispositif comporte en outre un bloc de décalage 14 disposant d'une borne d'entrée 15 connectée à la borne de neutre 3 de la source 1, d'une borne de sortie 17 connectée à la borne 5 de sortie de la charge 4 et d'une borne de référence 16, connectée à la borne de référence 9 du bloc de commutation 6.

Le bloc de décalage 14 permet de modifier le potentiel de la borne de sortie 5 de la charge 4, ainsi que cela est décrit en référence aux figures 2,7 et 8.

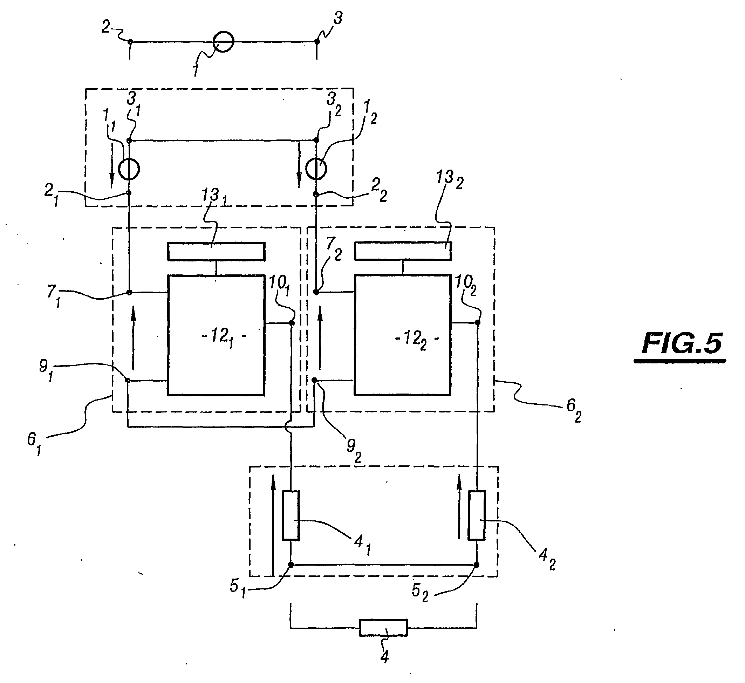

Sur la figure 5, est représentée une variante du cas d'un dispositif selon l'invention connecté à une seule source de tension alternative d'entrée 1 dont la borne de neutre 3 est accessible.

Dans le cas où le dispositif est connecté à une unique source de tension alternative d'entrée 1 dont les bornes d'alimentation 2 et de neutre 3 sont accessibles, cette source alternative d'entrée 1 peut être considérée comme formée de deux sources alternatives $1_1$ et $1_2$ en opposition de phase.

Le dispositif comporte alors deux blocs de commutation $6_1$ et $6_2$ qui sont connectées aux deux sources virtuelles $1_1$ et $1_2$ de manière classique ainsi que cela a été décrit en référence à la figure 1, la borne de neutre 3 faisant office de borne d'alimentation $2_2$.

Le bloc de commutation $6_1$ est associé à une charge $4_1$ et le bloc de commutation $6_2$ est associé à une charge $4_2$. Ces deux charges $4_1$ et $4_2$ sont connectées entre elles par leurs bornes de sortie $5_1$ et $5_2$.

Eventuellement, les deux charges $4_1$ et $4_2$ peuvent être remplacées par une unique charge 4 connectée entre les points de sortie $10_1$ et $10_2$ des blocs de commutation $6_1$ et $6_2$.

Un tel dispositif fonctionne de la même manière que le dispositif général décrit en référence à la figure 1.

Cependant, dans une telle configuration physique, on ne peut pas connecter un bloc de décalage.

Le fonctionnement d'un dispositif selon l'invention est décrit sur la base du cas particulier décrit en référence aux figures 6 à 8.

Sur la figure 6 est représenté un dispositif de conversion selon l'invention dans le cas particulier où il est connecté à trois sources de tension alternative d'entrée $1_1$, $1_2$ et $1_3$ associées à trois charges $4_1$, $4_2$ et $4_3$ par l'intermédiaire des blocs de commutation $6_1$, $6_2$ et $6_3$.

Les trois sources de tension alternative d'entrée $1_1$, $1_2$ et $1_3$ délivrent le même signal alternatif sinusoïdal de fréquence f et sont décalées entre elles d'un écart temporel de $\dfrac{1}{3f}$. Elles présentent chacune une borne d'alimentation $2_1$, $2_2$ et $2_3$ et une borne de neutre $3_1$, $3_2$ et $3_3$ qui peut être accessible ou pas.

Par exemple, dans le cas d'un réseau d'alimentation triphasé, chacune des sources de tension alternative d'entrée représente une phase du réseau.

Chaque bloc de commutation $6_1$, $6_2$ et $6_3$ comporte une borne d'entrée, $7_1$, $7_2$, et $7_3$, une borne de référence $9_1$, $9_2$ et $9_3$ et une borne de sortie $10_1$, $10_2$ et $10_3$. Les bornes d'entrée $7_1$, $7_2$, et $7_3$ sont reliées aux bornes d'alimentation $2_1$, $2_2$ et $2_3$ et sont représentées par les mêmes références $7_1$, $7_2$, et $7_3$.

Ils comprennent respectivement des matrices de commutation $12_1$, $12_2$ et $12_3$ associées à des moyens d'inhibition $13_1$ $13_2$ et $13_3$.

Dans un cas particulier, chaque matrice de commutation $12_1$, $12_2$ et $12_3$ ne comporte qu'un étage et qu'un rang et de ce fait qu'une cellule de commutation associée à un unique condensateur.

Ainsi que cela a été défini en référence à la figure 1, les bornes de neutre $3_1$, $3_2$ et $3_3$ sont toutes connectées entre elles et définissent un neutre commun aux trois sources de tension alternative d'entrée $1_1$, $1_2$ et $1_3$.

Les bornes de référence $9_1$, $9_2$ et $9_3$ sont connectées entre elles de même que les bornes de sortie $5_1$, $5_2$ et $5_3$ des charges $4_1$, $4_2$ et $4_3$.

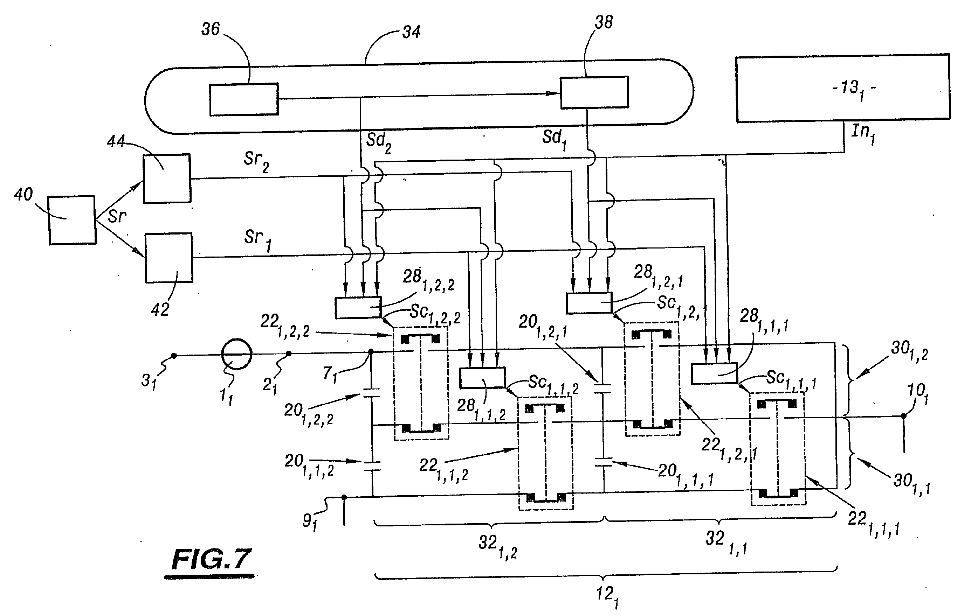

En référence aux figures 7 et 8 est décrit le détail du bloc de commutation $6_1$ et de son système de commande.

La matrice $12_1$ du bloc $6_1$ comporte deux étages $30_{1,1}$ et $30_{1,2}$ et deux rangs $32_{1,1}$ et $32_{1,2}$. Elle comporte donc quatre cellules de commutation $22_{1,1,1}$, $22_{1,1,2}$, $22_{1,2,1}$ et $22_{1,2,2}$ associées aux quatre condensateurs $20_{1,1,1}$, $20_{1,1,2}$, $20_{1,2,1}$ et $20_{1,2,2}$ et commandées respectivement par quatre dispositifs de commande $28_{1,1,1}$, $28_{1,1,2}$, $28_{1,2,1}$ et $28_{1,2,2}$.

Le système de commande est constitué d'un module de synchronisation 34 qui comprend des moyens de génération 36 de signaux triangulaires alternatifs symétriques de fréquence F ainsi qu'un circuit retard 38, qui engendrent deux signaux $Sd_1$ et $Sd_2$ décalés d'un écart temporel égal à $\dfrac{1}{2F}$ et alimentant respectivement les dispositifs $28_{11,1}$, $28_{1,2,1}$ de commande du premier rang, et $28_{1,1,2}$, $28_{1,2,2}$ du deuxième rang.

Bien entendu, dans le cas où chaque matrice de commutation comporte p rangs, les signaux triangulaires issus du module de synchronisation 34, sont tous décalés d'un écart temporel de $\dfrac{1}{pF}$.

Ces signaux de synchronisation sont utilisés par tous les blocs de commutation du dispositif.

Dans le mode de réalisation décrit ici, la fréquence F est nettement supérieure à la fréquence f des sources de tension alternative $1_1$, $1_2$ et $1_3$ et est choisie pour représenter plus précisément un multiple de f par souci de simplicité.

Le dispositif comprend également un générateur de signal de pilotage 40 délivrant un signal de référence Sr continu variant entre 0 et 1 qui correspond au réglage de la quantité d'énergie à transférer entre la source de tension alternative d'entrée $6_1$ et la source de courant $4_1$.

Ce signal de référence Sr est traité en sortie du générateur de pilotage 40 par deux modules de traitement respectifs 42 et 44 de premier et deuxième étage, pour fournir respectivement en sortie, deux signaux secondaires de référence $Sr_1$ et $Sr_2$. Ces deux signaux $Sr_1$ et $Sr_2$ alimentent respectivement les dispositifs de commande $28_{1,1,1}$, $28_{1,1,2}$ du premier étage et $28_{1,2,1}$, $28_{1,2,2}$ du deuxième étage.

Ces signaux de commande secondaires sont utilisés par tous les blocs de commutation du dispositif.

Les quatre dispositifs de commande $28_{1,1,1}$ à $28_{1,2,2}$ sont synchronisés et délivrent des signaux de commande à une fréquence F, adaptés pour assurer en dehors des périodes d'inhibition du bloc $6_1$, les commutations à des états opposés des deux interrupteurs de chaque cellule.

Chaque dispositif de commande $28_{1,1,1}$ à $28_{1,2,2}$ comporte par exemple un comparateur dont l'état logique en sortie est le résultat de la comparaison de trois signaux, dont un est issu du module de synchronisation 34, un autre du générateur de pilotage 40, et un troisième des moyens d'inhibition $13_1$.

Le dispositif de commande $28_{1,i,k}$ fournit donc en sortie un signal de commande $Sc_{1,i,k}$ dont la valeur détermine l'état de la cellule de commutation $22_{1,i,k}$.

Ce signal de commande $Sc_{1,i,k}$ doit permettre de différentier les trois états d'une cellule de commutation, soit les deux états de commutation opposée des interrupteurs et l'état d'inhibition où les deux interrupteurs sont fermés.

Un exemple de réalisation d'un tel système de commande est décrit en référence à la figure 8.

Dans le mode de réalisation décrit, on remarque que les interrupteurs des groupes extrêmes sont susceptibles de supporter une tension double de celle supportée par les interrupteurs du groupe intermédiaire.

Avantageusement, les interrupteurs $24_{1,1,1}$, $24_{1,2,1}$, $26_{1,1,2}$ et $26_{1,2,2}$, des groupes extrêmes sont formés de deux interrupteurs élémentaires identiques 50 montés en série et commandés pour être dans le même état à tout instant. Chaque interrupteur élémentaire 50 est formé d'un transistor 52 monté avec une diode 54 en anti-parallèle. Ainsi, tous les composants électroniques formant les interrupteurs d'un bloc de commutation sont identiques.

En outre, tous les composants électroniques formant les interrupteurs élémentaires 50 de tous les blocs de commutation d'un dispositif selon l'invention, sont unidirectionnels en courant et en tension.

Dans l'exemple décrit en référence à la figure 8, la tension entre la borne d'entrée $7_1$ et la borne de référence $9_1$ est toujours positive et nulle.

Dans le cas où l'on inverse tous les composants électroniques polarisés du dispositif, cette tension est négative ou nulle.

On va maintenant détailler une variante du système de commande au niveau des interrupteurs d'une cellule de commutation, et plus précisément de la cellule de commutation $22_{1,2,2}$.

Cette cellule comporte un premier interrupteur $24_{1,2,2}$ formé d'un unique interrupteur élémentaire 50 et un second interrupteur $26_{1,2,2}$ formé de deux interrupteurs élémentaires 50. Elle est commandée par le dispositif de commande $28_{1,2,2}$.

Ce dispositif de commande $28_{1,2,2}$ génère un signal de commande $Sc_{1,2,2}$ et, est connecté en sortie directement à une première porte OU logique et, par l'intermédiaire d'un inverseur, à une seconde porte OU logique.

Les deux portes OU sont en outre connectées aux moyens d'inhibition $13_1$ et reçoivent le signal $In_1$.

La première porte OU est reliée en sortie aux deux interrupteurs élémentaires constituant l'interrupteur $26_{1,2,2}$, afin de délivrer le signal de commande $Sc26_{1,2,2}$ obtenu pour une opération de OU logique entre les signaux $Sc_{1,2,2}$ et $In_1$.

La seconde porte OU est reliée en sortie à l'interrupteur $24_{1,2,2}$ afin de délivrer le signal de commande $Sc24_{1,2,2}$ obtenu par une opération de OU logique entre les signaux $\overline{Sc_{1,2,2}}$ et $In_1$.

Il apparaît donc que lorsque le signal d'inhibition $I_{n1}$ vaut 0, les signaux de commande $Sc\,24_{1,2,2}$ et $Sc\,26_{1,2,2}$ sont complémentaires, ce qui permet d'assurer une commutation à des états opposés des deux interrupteurs formant la cellule $22_{1,2,2}$.

Lorsque le signal $I_{n1}$ vaut 1, les deux signaux de commande $Sc\,24_{1,2,2}$ et $Sc\,26_{1,2,2}$ valent 1, ce qui correspond à la fermeture des interrupteurs $24_{1,2,2}$ et $26_{1,2,2}$. La cellule $22_{1,2,2}$ est alors inhibée.

Les autres cellules du dispositif sont commandées de manière analogue.

Dans un autre exemple, les signaux de commande sont constitués d'une commande numérique codée sur deux bits.

Ainsi, lorsque le signal d'inhibition $In_1$ vaut 0 le signal de commande $Sc_{1,1,k}$ vaut 01 ou 00. Dans le cas ou il vaut 01, l'interrupteur $24_{1,1,k}$ de la cellule de commutation $22_{1,1,k}$ est bloqué et l'interrupteur $26_{1,1,k}$ de cette même cellule est passant. Inversement, lorsque le signal de commande $Sc_{1,i,k}$ vaut 00, l'interrupteur $24_{1,i,k}$ de la cellule de commutation $22_{1,i,k}$ est passant et l'interrupteur $26_{1,i,k}$ de cette même cellule est bloqué.

Enfin, en cas d'inhibition du bloc de commutation $6_1$, le signal d'inhibition $In_1$ vaut 1, le signal $Sc_{1,1,k}$ vaut 11 ou 10, et tous les interrupteurs des cellules de commutation $22_{1,1,1}$ à $22_{1,2,2}$ sont fermés.

Dans le cas où le dispositif comporte un bloc de décalage, il est commandé de la même manière qu'un bloc de commutation en l'absence du signal d'inhibition. Tous les interrupteurs sont donc commandés en des commutations opposées.

La commande simultanée des deux interrupteurs d'une même cellule ne sera pas davantage décrite par la suite, étant considérée comme connue de l'état de la technique.

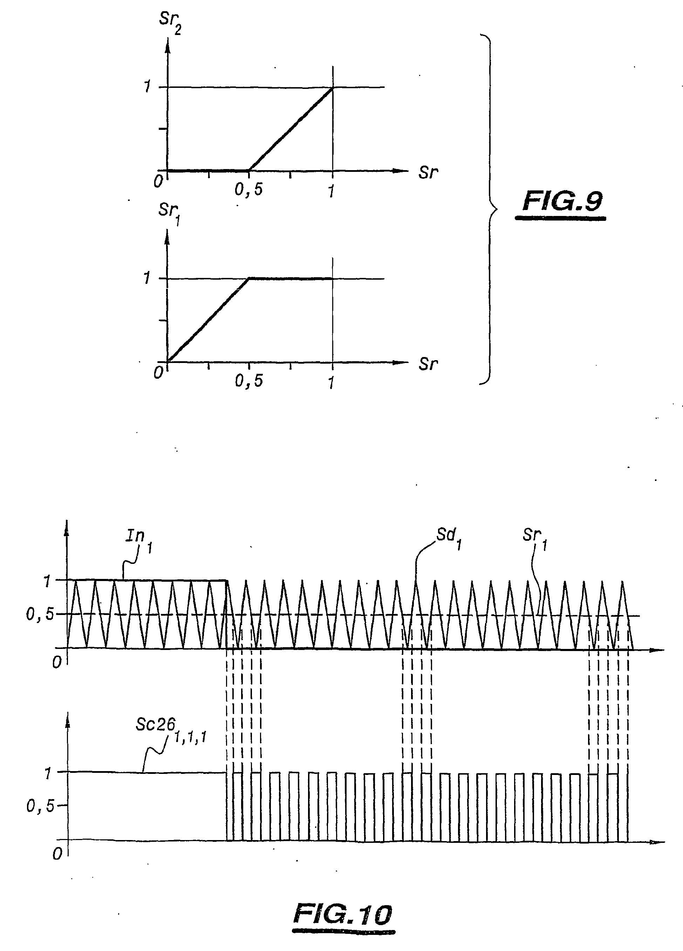

Comme cela apparaît en référence à la figure 9, le signal $Sr_1$ destiné aux dispositifs de commande du premier étage $30_{1,1}$, vaut 2x Sr entre 0 et ½ et est fixé à 1 entre ½ et 1. Le signal $Sr_2$ destiné aux dispositifs de commande du second étage $30_{1,2}$ vaut 0 jusqu'à ½ puis 2x Sr entre ½ et 1.

Dans le cas où les matrices $12_1$ à $12_3$ des blocs de commutation $6_1$ à $6_3$ comportent trois étages, il convient de déterminer trois signaux de commande secondaires. Le premier vaut 3x Sr entre 0 et 1/3 puis étant fixé à 1, le second vaut 0 avant 1/3, 3x Sr entre 1/3 et 2/3 et 1 après 2/3 et le troisième vaut 0 avant 2/3 et 3x Sr entre 2/3 et 1. De manière générale, un dispositif comportant n étage présente n signaux $Sr_1$ à $Sr_n$.

Par exemple, dans le dispositif décrit en référence aux figures 6 à 9, si le signal Sr vaut 0,25, le signal $Sr_1$ vaut 0,5 et le signal $Sr_2$ est nul.

La figure 10 représente d'une part l'allure des trois signaux $Sr_1$, $Sd_1$ et $In_1$ fournis en entrée du dispositif de commande $28_{1,1,1}$ et d'autre part l'allure du signal de commande $Sc26_{1,1,1}$ fourni par le dispositif de commande $28_{1,1,1}$, vers l'interrupteur $26_{1,1,1}$ en fonction des signaux reçus en entrée.

Le signal de commande $Sc24_{1,1,1}$ adressé à l'interrupteur $24_{1,1,1}$ n'est pas représenté.

Le signal $Sd_1$ est un signal triangulaire d'amplitude variant entre 0 et 1 et de fréquence F valant ici 20f.

Pour le premier rang du premier étage, lorsque le signal d'inhibition $In_1$ est nul, le signal $Sc26_{1,1,1}$ est un signal en créneau, de valeur nulle lorsque la relation $Sd_1 > Sr_1$ est vérifiée et, de valeur unité lorsque la relation $Sd_1 < Sr_1$ est vérifiée ainsi que cela est représenté en référence à la figure 10.

Ce signal et le signal $Sc24_{1,1,1}$ sont complémentaires et engendrent la commutation à des états opposés des interrupteurs de la cellule de commutation $22_{1,1,1}$.

Lorsque le signal $In_1$ vaut 1, les signaux $Sc24_{1,1,1}$ et $Sc26_{1,1,1}$ sont fixés à 1 et tous les interrupteurs de la cellule de commutation $22_{1,1,1}$ sont fermés.

L'ensemble des cellules de la matrice de commutation reçoit le même signal d'inhibition $In_1$, tous les interrupteurs sont donc fermés. Le bloc est alors en mode d'inhibition.

Pour le premier rang du second étage, dans l'exemple choisi avec Sr = 0,25, le signal $Sr_2$ est nul. De fait, lorsque $In_1$ est nul, $Sr_2$ étant inférieur à $Sd_1$, le signal $Sc_{1,2,1}$ vaut zéro. La cellule de commutation $22_{1,2,1}$ est dans un état fixe. L'interrupteur $26_{1,2,1}$ étant ouvert et l'interrupteur $24_{1,2,1}$ étant fermé.

Lorsque $In_1$ vaut 1, le bloc de commutation 6 est inhibé, les signaux $Sc24_{1,2,1}$ et $Sc26_{1,2,1}$ sont fixés à 1 et tous les interrupteurs sont fermés.

Pour le second rang du dispositif, le signal $Sd_2$ est un signal triangulaire d'amplitude variant entre 0 et 1 et de fréquence F, décalé d'un écart temporel égal à $\dfrac{1}{2F}$ par rapport au signal $Sd_1$. Les signaux $Sc_{1,1,2}$ et $Sc_{1,2,2}$ sont alors des signaux en créneau, décalés d'un écart temporel égal à $\dfrac{1}{2F}$ par rapport aux signaux $Sc_{1,1,1}$ et $Sc_{1,2,1}$.

Par ailleurs, le signal d'inhibition $In_1$ est commun à toutes les cellules du bloc. De ce fait, les différents rangs d'un même étage se comportent de manière analogue en présentant un écart temporel de $\dfrac{1}{2F}$.

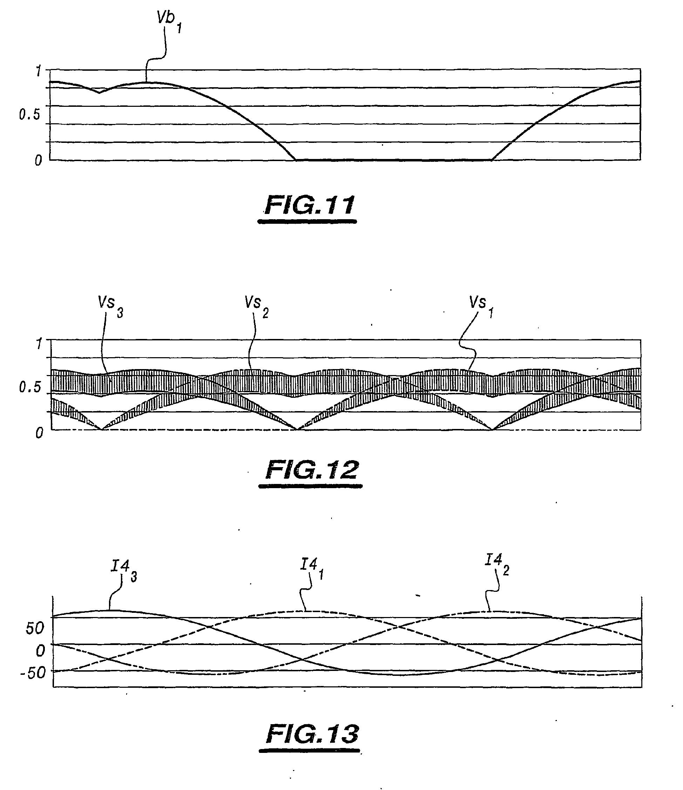

Sur la figure 11 est représenté la tension d'entrée d'un des blocs de commutation du dispositif décrit en référence aux figures 6 à 10.

La tension $Vb_1$ correspond à la différence de potentiel entre la borne d'entrée $7_1$ du bloc de commutation $6_1$ et la borne de référence $9_1$.

Il apparaît que, bien que la source de tension $1_1$ associée au bloc $6_1$ soit une source alternative sinusoïdale, la tension $Vb_1$ a une forme particulière du fait des variations du potentiel de la borne de référence $9_1$ et de la période d'inhibition du bloc de commutation $6_1$.

Elle présente une partie positive avec une double courbure sur une période de 2/3 f et une partie nulle sur une période de 1/3 f correspondant à la période d'inhibition du bloc $6_1$.

Les tensions $Vb_2$ et $Vb_3$ ont la même forme que la tension $Vb_1$ tout en étant décalée entre elles d'un tiers de période.

En effet, chacun des blocs de commutation $6_1$, $6_2$ et $6_3$ est inhibé pendant un tiers de la période correspondant à la fréquence f des sources de tension alternative d'entrée $1_1$, $1_2$ et $1_3$.

De plus, les trois sources de tension $1_1$, $1_2$ et $1_3$ sont décalée entre elles d'un tiers de période.

En référence à la figure 12 sont représentées les tensions de sortie des blocs de commutation $6_1$, $6_2$ et $6_3$.

Ces tensions de sortie $Vs_1$, $Vs_2$ et $Vs_3$ corres-

pondent à la différence de potentiel entre les bornes de sortie $10_1, 10_2$ et $10_3$ des blocs de commutation $6_1, 6_2$ et $6_3$ et leurs bornes de référence $9_1, 9_2$ et $9_3$.

Elles présentent une enveloppe correspondant à la forme générale des tensions d'entrée $Vb_1, Vb_2$ et $Vb_3$ modulées à la fréquence F des moyens de commande.

La représentation faite à la figure 12 est symbolique et le rapport 20 entre les fréquences f et F n'est pas respecté.

En référence à la figure 13 sont représentés les courants de charge apparaissant dans les charges $4_1$, $4_2$ et $4_3$.

Il apparaît que les courants de charge $I4_1, I4_2$ et $I4_3$ imposés par les tensions composées $Vs_1 - Vs_2$, $Vs_2 - Vs_3$ et $Vs_3 - Vs_1$, sont sinusoïdaux et de même fréquence f que les sources de tension alternative d'entrée $1_1, 1_2$ et $1_3$.

L'intensité de ces courants est fixée de manière continue par la détermination du signal de commande Sr.

Il apparaît clairement qu'un dispositif de conversion d'énergie électrique selon l'invention présente l'avantage, de par le fait que la tension d'entrée des blocs de commutation est toujours de même signe ou nulle, de pouvoir utiliser des composants électroniques moins coûteux et moins encombrants que les dispositifs existants.

De plus, les composants électroniques mis en oeuvre dans l'invention sont soumis à des contraintes en tension moins importantes que ceux des dispositifs existants.

Un tel dispositif est donc apte à effectuer une conversion d'énergie électrique de moyenne ou forte puissance entre une ou plusieurs sources de tension alternative d'entrée et une ou plusieurs sources de courant alternatif, en utilisant des éléments de faible coût, un réglage rapide, continu et fiable.

De plus, des filtres classiques sont disposés sur chacune des sources de tension alternative d'entrée et sur chacune des sources de courant de sortie.

## Revendications

1. Dispositif de conversion réversible d'énergie électrique connectable entre au moins une source de tension alternative d'entrée ($1_1$ à $1_n$) et au moins une charge ($4_1$ à $4_n$) formant source de courant alternatif de sortie ($4_1$ à $4_n$), chaque source de tension alternative d'entrée ($1_1$ à $1_n$) présentant une borne d'alimentation ($2_1$ à $2_n$) et une borne de neutre ($3_1$ à $3_n$), le dispositif comportant au moins un bloc de commutation ($6_1$ à $6_n$), adapté pour être associé à une source de courant alternatif de sortie ($4_1$ à $4_n$) et comportant une borne d'entrée ($7_1$ à $7_n$) à laquelle est connectable la borne d'alimentation ($2_1$ à $2_n$) de la source de tension alternative d'entrée ($1_1$ à $1_n$), au moins une borne de référence ($9_1$ à $9_n$) et une borne de sortie ($10_1$ à $10_n$) à laquelle est connectable

ladite charge ($4_1$ à $4_n$) formant source de courant alternative de sortie, ledit bloc ($6_1$ à $6_n$) comportant également une matrice de commutation ($12_1$ à $12_n$) formée de condensateurs ($20_{j,i,k}$) et de cellules de commutation ($22_{j,i,k}$), lesquelles cellules sont contrôlées individuellement par des moyens ($28_{j,i,k}$) de commande de leur fonctionnement, **caractérisé en ce que** le ou chaque bloc de commutation ($6_1$ à $6_n$) comporte une unique borne de référence ($9_1$ à $9_n$) qui est à un potentiel de référence différent du potentiel de ladite borne de neutre ($3_1$ à $3_n$) de ladite source ($1_1$ à $1_n$), et **en ce qu'**il comporte des moyens ($13_1$ à $13_n$, 50) de maintien permanent, à un signe constant ou nul, de la différence de potentiel entre ladite borne d'entrée ($7_1$ à $7_n$) et ladite borne de référence ($9_1$ à $9_n$) du ou de chaque bloc de commutation ($6_1$ à $6_n$).

2. Dispositif de conversion selon la revendication 1, **caractérisé en ce que** la matrice ($12_1$ à $12_n$) du ou de chaque bloc ($6_1$ à $6_n$) comporte au moins un étage ($30_{j,1}$ à $30_{j,n}$) comportant au moins un rang ($32_{j,1}$ à $32_{j,p}$) de cellules de commutation ($22_{j,i,k}$), agencées à raison d'une seule cellule de commutation ($22_{j,i,k}$) pour chaque étage ($32_{j,1}$ à $32_{j,p}$) d'un même rang ($30_{j,1}$ à $30_{j,n}$), chaque cellule de commutation ($22_{j,i,k}$) étant composée de deux éléments formant interrupteur ($24_{j,i,k}$, $26_{j,i,k}$), le ou chaque étage ($30_{j,1}$ à $30_{j,n}$) définissant deux groupes d'interrupteurs reliés en série et ladite matrice de commutation ($12_1$ à $12_n$) définissant alors deux groupes extrêmes d'interrupteurs, chaque cellule de commutation ($22_{j,i,k}$) étant associée à un condensateur ($20_{j,i,k}$) dimensionné pour maintenir entre les bornes homologues des deux interrupteurs ($24_{j,i,k}$, $26_{j,i,k}$) de chaque cellule de commutation ($22_{j,i,k}$), une tension de charge égale à une fraction de la tension de la source de tension alternative d'entrée ($1_1$ à $1_n$), décroissante en fonction de leur rang à partir de cette source, les condensateurs ($20_{j,i,k}$) d'un même rang ($32_{j,1}$ à $32_{j,p}$) étant connectés en série entre les deux groupes extrêmes d'interrupteurs.

3. Dispositif selon la revendication 2, **caractérisé en ce que** tous les interrupteurs ($24_{j,i,k}$, $26_{j,i,k}$) de chaque cellule de commutation ($22_{j,i,k}$) sont unidirectionnels en tension et bidirectionnels en courant.

4. Dispositif selon la revendication 3, **caractérisé en ce que** tous les interrupteurs ($24_{j,i,k}$, $26_{j,i,k}$) de chaque cellule de commutation ($22_{j,i,k}$), sont formés de composants électroniques (52, 54) qui sont unidirectionnels en tension et unidirectionnels en courant.

5. Dispositif selon l'une quelconque des revendications 2 à 4, **caractérisé en ce que** tous les interrupteurs ($24_{j,i,k}$, $26_{j,i,k}$) de chaque cellule de commutation ($22_{j,i,k}$) sont formés de composants électroniques (52, 54) tous identiques, et **en ce que** chaque interrupteur est constitué d'interrupteurs élémentaires identiques (50) connectés en série dont le nombre est fonction de la tension maximale applicable entre ses bornes.

6. Dispositif selon l'une quelconque des revendications 2 à 4, **caractérisé en ce qu'**il comporte des moyens (34, 40, 42, 44) de pilotage des moyens de commande ($28_{j,i,k}$) comportant des moyens de traitement (42, 44) d'un signal de référence (Sr) pour délivrer en sortie une pluralité de signaux secondaires de référence ($Sr_1$ à $Sr_n$), et des moyens de transmission de chaque signal secondaire de référence à tous les moyens de commande ($28_{j,i,k}$) des cellules de commutation d'un même étage de toutes les matrices ($12_1$ à $12_n$) de tous les blocs ($6_1$ à $6_n$) du dispositif.

7. Dispositif selon la revendication 6, **caractérisé en ce que** lesdits moyens de traitement (42, 44) sont adaptés pour délivrer une pluralité de signaux secondaires de référence ($Sr_1$ à $Sr_n$) qui sont des fonctions affines par morceau du signal de référence (Sr), chaque signal secondaire de référence ($Sr_1$ à $Sr_n$) d'un étage ($30_{j,k}$) étant à chaque instant de valeur supérieure ou égale à la valeur d'un signal secondaire de référence d'un étage plus proche de la source de tension ($1_1$ à $1_n$).

8. Dispositif selon la revendication 6, **caractérisé en ce que** lesdits moyens de pilotage (34, 40, 42, 44) comportent des moyens de génération d'un signal de synchronisation (34) pour délivrer en sortie une pluralité de signaux secondaires de synchronisation ($Sd_1$ à $Sd_p$), et des moyens de transmission de chaque signal secondaire de synchronisation ($Sd_1$ à $Sd_p$) à tous les moyens de command ($28_{j,i,k}$) des cellules de commutation d'un même rang de toutes les matrices ($12_1$ à $12_n$) de tous les blocs ($6_1$ à $6_n$) du dispositif.

9. Dispositif selon l'une quelconque des revendications 1 à 8, **caractérisé en ce qu'**il comporte un unique bloc de commutation (6) et est connectable à une seule source de tension alternative d'entrée (1) dont ladite borne de neutre (3) est accessible pour permettre une connexion et qui est associée à une seule charge (4) formant source de courant alternatif de sortie, et **en ce qu'**il comprend en outre un premier condensateur (20) connectable entre ladite borne de neutre (3) de ladite source (1) et une borne de sortie (5) de la charge (4) et un second condensateur (22) connectable entre la borne de référence (9) dudit bloc de commutation (6) et la borne de sortie (5) de la charge (4).

10. Dispositif selon l'une quelconque des revendications 1 à 8, **caractérisé en ce qu'**il comporte un unique bloc de commutation (6) et est connectable à une seule source de tension alternative d'entrée (1) dont ladite borne de neutre (3) est accessible pour permettre une connexion et qui est associée à une seule charge (4) formant source de courant alternatif de sortie, et **en ce qu'**il comporte un bloc de décalage (14) comportant une borne d'entrée (15) adaptée pour être reliée à ladite borne de neutre (3) de ladite source (1), une borne de référence (16) reliée à la borne de référence (9) du bloc de commutation (6), et une borne de sortie (17) connectable à la borne de sortie (5) de la charge (4), ledit bloc de décalage (14) permettant de modifier le potentiel de la borne de sortie (17) connectable à une borne de sortie (5) de la charge (4).

11. Dispositif selon l'une quelconque des revendications 1 à 8, **caractérisé en ce qu'**il comporte un premier et un second blocs de commutation ($6_1$, $6_2$) et est connectable à une seule source de tension alternative d'entrée (1) dont ladite borne de neutre (3) est accessible pour permettre une connexion et qui est associée à une seule charge (4) formant source de courant alternatif de sortie, les bornes de référence des deux blocs de commutation ($6_1$, $6_2$) étant reliées entre elles, le premier bloc de commutation ($6_1$) étant adapté pour être connecté par sa borne d'entrée ($7_1$) à la borne d'alimentation (2) de ladite source (1), le second bloc de commutation ($6_2$) étant adapté pour être connecté par sa borne d'entrée ($7_2$) à la borne de neutre (3) de ladite source (1), ledit dispositif étant en outre adapté pour la connexion de ladite charge (4) entre les bornes de sortie ($10_1$, $10_2$) des deux blocs de commutation.

12. Dispositif selon l'une quelconque des revendications 9 à 11, **caractérisé en ce que** les moyens de maintien permanent, à in signe constant ou nul de la différence de potentiel entre la dite borne d'entrée (7 ; $7_1$, $7_2$) et ladite borne de référence (9 ; $9_1$, $9_2$) comportent, associés au ou à chaque bloc de commutation (6 ; $6_1$, $6_2$), des moyens d'inhibition (13 ; $13_1$, $13_2$) comportant des moyens d'évaluation du signe de la différence de potentiel entre ladite borne d'entrée (7) et ladite borne de neutre (3) de la source (1), adaptés pour délivrer en sortie un signal d'inhibition du bloc de commutation (6), et **en ce que** le ou chaque bloc de commutation (6 ; $6_1$, $6_2$) est adapté pour relier ensemble sa borne d'entrée (7 ; $7_1$, $7_2$), sa borne de référence (9 ; $9_1$, $9_2$) et sa borne de sortie (10 ; $10_1$, $10_2$), lors de la réception dudit signal d'inhibition.

13. Dispositif selon la revendication 12, **caractérisé en ce que** lesdits moyens d'inhibition (13) sont adaptés pour délivrer ledit signal d'inhibition lorsque la différence de potentiel entre ladite borne d'entrée (7) et ladite borne de neutre (3) de la source (1) est négative, la matrice de commutation (12) étant en outre formée de composants électroniques (52, 54) orientés de sorte que ledit bloc de commutation supporte uniquement une tension positive ou nulle.

14. Dispositif selon la revendication 12, **caractérisé en ce que** lesdits moyens d'inhibition (13) sont adaptés pour délivrer ledit signal d'inhibition lorsque la différence de potentiel entre ladite borne d'entrée (7) et ladite borne de neutre (3) de la source (1) est positive, la matrice de commutation (12) étant en outre formée de composants électroniques (52, 54) orientés de sorte que ledit bloc de commutation supporte uniquement une tension négative ou nulle.

15. Dispositif selon l'une des revendications 1 à 8, **caractérisé en ce qu'**il est connectable à au moins deux sources de tension alternative d'entrée ($1_1$ à $1_n$) dont les bornes de neutre ($3_1$ à $3_n$) sont toutes reliées entre elles, associées au même nombre de charges ($4_1$ à $4_n$) formant sources de courant alternatif de sortie et dont des bornes de sortie ($5_1$ à $5_n$) sont également toutes reliées entre elles et **en ce qu'**il comporte une pluralité de blocs de commutation ($6_1$ à $6_n$), les bornes de référence ($9_1$ à $9_n$) des blocs de commutation ($6_1$ à $6_n$) étant toutes reliées entre elles.

16. Dispositif selon la revendication 15, **caractérisé en ce que** lesdites bornes de neutre ($3_1$ à $3_n$) desdites sources ($1_1$ à $1_n$) sont accessibles pour permettre une connexion, et **en ce qu'**il comporte un bloc de décalage (14) comportant une borne d'entrée (15) adaptée pour être reliée auxdites bornes de neutre ($3_1$ à $3_n$), une borne de référence (16) reliée à l'ensemble des bornes de référence ($9_1$ à $9_n$) des blocs de commutation ($6_1$ à $6_n$) et une borne de sortie (17) connectable à l'ensemble des bornes de sortie ($5_1$ à $5_n$) des charges ($4_1$ à $4_n$) formant source de courant alternatif de sortie, ledit bloc de décalage (14) permettant de modifier le potentiel de la borne de sortie (17) connectable aux bornes de sortie ($5_1$ à $5_n$) des charges ($4_1$ à $4_n$).

17. Dispositif selon l'une quelconque des revendications 15 et 16, **caractérisé en ce que** les moyens de maintien permanent, à un signe constant ou nul de la différence de potentiel entre la dite borne d'entrée ($7_1$ à $7_n$) et ladite borne de référence ($9_1$ à $9_n$) comportent, associés au ou à chaque bloc de commutation ($6_1$ à $6_n$), des moyens d'inhibition ($13_1$ à $13_n$) comportant des moyens de comparaison de la différence de potentiel entre les bornes d'entrée ($7_1$ à $7_n$) et une borne de potentiel commun à tous lesdits blocs de commutation ($6_1$ à $6_n$), telle que les bornes de neutre ($3_1$ à $3_n$) des sources ($1_1$ à $1_n$), les bornes de sortie ($5_1$ à $5_n$) des charges ($4_1$ à $4_n$) ou les bornes de référence ($9_1$ à $9_n$), adaptés pour délivrer en sortie des signaux d'inhibition des blocs de commutation ($6_1$ à $6_n$) et **en ce que** le ou chaque bloc de commutation ($6_1$ à $6_n$) est adapté pour relier ensemble sa borne d'entrée ($7_1$ à $7_n$), sa borne de référence ($9_1$ à $9_n$) et sa borne de sortie ($10_1$ à $10_n$), lors de la réception dudit signal d'inhibition.

18. Dispositif selon la revendication 17, **caractérisé en ce que** lesdits moyens d'inhibition ($13_1$ à $13_n$) sont adaptés pour délivrer un signal d'inhibition uniquement au bloc dont la différence de potentiel entre les bornes d'entrée ($7_1$ à $7_n$) et une borne de potentiel commun à tous lesdits blocs de commutation ($6_1$ à $6_n$), telle que les bornes de neutre ($3_1$ à $3_n$) des sources ($1_1$ à $1_n$), les bornes de sortie ($5_1$ à $5_n$) des charges ($4_1$ à $4_n$) ou les bornes de référence ($9_1$ à $9_n$), est la plus faible, les matrices de commutation ($12_1$ à $12_n$) étant en outre formées de composants électroniques (52, 54) orientés de sorte que lesdits blocs ($6_1$ à $6_n$) supportent uniquement une tension positive ou nulle.

19. Dispositif selon la revendication 18, **caractérisé en ce que** lesdits moyens d'inhibition ($13_1$ à $13_n$) sont adaptés pour délivrer un signal d'inhibition uniquement au bloc dont la différence de potentiel entre les bornes d'entrée ($7_1$ à $7_n$) et une borne de potentiel commun à tous lesdits blocs de commutation ($6_1$ à $6_n$), telle que les bornes de neutre ($3_1$ à $3_n$) des sources ($1_1$ à $1_n$), les bornes de sortie ($5_1$ à $5_n$) des charges ($4_1$ à $4_n$) ou les bornes de référence ($9_1$ à $9_n$), est la plus grande, les matrices de commutation ($12_1$ à $12_n$) étant en outre formées de composants électroniques (52, 54) orientés de sorte que lesdits blocs ($6_1$ à $6_n$) supportent uniquement une tension négative ou nulle.

20. Dispositif selon l'une quelconque des revendications précédentes, **caractérisé en ce qu'**il est adapté pour être connecté à trois sources de tension alternative d'entrée ($1_1$ à $1_3$) formant les trois phases d'un réseau d'alimentation en énergie électrique triphasé.

21. Dispositif selon la revendication 20, **caractérisé en ce que** chaque matrice ($12_1$, $12_2$ et $12_3$) de chaque bloc de commutation ($6_1$, $6_2$, $6_3$) comporte un unique condensateur ($20_{j,i,k}$) et une unique cellule de commutation ($22_{j,i,k}$).

**Claims**

1. Device for reversibly converting electrical energy, which device can be connected between at least one input alternating voltage source ($1_1$ to $1_n$) and at least one load ($4_1$ to $4_n$) which forms an output alternating current source ($4_1$ to $4_n$), each input alternating voltage source ($1_1$ to $1_n$) having a supply terminal ($2_1$ to

$2_n$) and a neutral terminal ($3_1$ to $3_n$), the device comprising at least one switching block ($6_1$ to $6_n$) which is adapted for connection to an output alternating current source ($4_1$ to $4_n$) and which comprises an input terminal ($7_1$ to $7_n$), to which the supply terminal ($2_1$ to $2_n$) of the input alternating voltage source ($1_1$ to $1_n$) can be connected, at least one reference terminal ($9_1$ to $9_n$) and an output terminal ($10_1$ to $10_n$), to which said load ($4_1$ to $4_n$) which forms the output alternating current source can be connected, said block ($6_1$ to $6_n$) also comprising a switching matrix ($12_1$ to $12_n$) which is formed by capacitors ($20_{j,i,k}$) and switching cells ($22_{j,i,k}$), which cells are controlled individually by means ($28_{j,i,k}$) for controlling the operation thereof, **characterised in that** the switching block or each switching block ($6_1$ to $6_n$) comprises a single reference terminal ($9_1$ to $9_n$) which is at a different reference potential from the potential of said neutral terminal ($3_1$ to $3_n$) of said source ($1_1$ to $1_n$), and **in that** it comprises means ($13_1$ to $13_n$, 50) for permanently maintaining, at a constant sign or zero, the difference in potential between said input terminal ($71$ to $7_n$) and said reference terminal ($9_1$ to $9_n$) of the switching block or each switching block ($6_1$ to $6_n$).

2. Conversion device according to claim 1, **characterised in that** the matrix ($12_1$ to $12_n$) of the block or each block ($6_1$ to $6_n$) comprises at least one level ($30_{j,1}$ to $30_{j,n}$) which comprises at least one row ($32_{j,1}$ to $32_{j,p}$) of switching cells ($22_{j,i,k}$), which are arranged on the basis of a single switching cell ($22_{j,i,k}$) for each level ($32_{j,1}$ to $32_{j,p}$) of the same row ($30_{j,1}$ to $30_{j,n}$) each switching cell ($22_{j,i,k}$) being composed of two elements which form an interrupter ($24_{j,i,k}$, $26_{j,i,k}$), the level or each level ($30_{j,1}$ to $30_{j,n}$) defining two groups of switches which are connected in series and said switching matrix ($12_1$ to $12_n$) then defining two extreme groups of interrupters, each switching cell ($22_{j,i,k}$) being connected to a capacitor ($20_{j,1,k}$) which is sized in order to maintain, between the homologous terminals of the two interrupters ($24_{j,i,k}$, $26_{j,i,k}$) of each switching cell ($22_{j,i,k}$), a charging voltage which is equal to a fraction of the voltage of the input alternating voltage source ($1_1$ to $1_n$), which voltage fraction decreases as a function of the row thereof starting from this source, the capacitors ($20_{j,i,k}$) of the same row ($32_{j,1}$ to $32_{j,p}$) being connected in series between the two extreme groups of interrupters.

3. Device according to claim 2, **characterised in that** all of the interrupters ($24_{j,i,k}$, $26_{j,i,k}$) of each switching cell ($22_{j,i,k}$) are unidirectional in terms of voltage and bidirectional in terms of current.

4. Device according to claim 3, **characterised in that** all of the interrupters ($24_{j,i,k}$, $26_{j,i,k}$) of each switching cell ($22_{j,i,k}$) are formed by electronic components (52, 54) which are unidirectional in terms of voltage and unidirectional in terms of current.

5. Device according to one of claims 2 to 4, **characterised in that** all of the interrupters ($24_{j,i,k}$, $26_{j,i,k}$) of each switching cell ($22_{j,i,k}$) are formed by electronic components (52, 54) which are all identical, and **in that** each interrupter is composed of identical elementary interrupters (50) which are connected in series and the number of which is a function of the maximum voltage applicable between the terminals thereof.

6. Device according to one of claims 2 to 4, **characterised in that** it comprises means (34, 40, 42, 44) for monitoring the means of control ($28_{j,i,k}$), comprising means (42, 44) for processing a reference signal (Sr) in order to deliver at the output a plurality of secondary reference signals ($Sr_1$ to $Sr_n$), and means for transmitting each secondary reference signal to all of the means of control ($28_{j,i,k}$) of the switching cells of the same level of all of the matrices ($12_1$ to $12_n$) of all of the blocks ($6_1$ to $6_n$) of the device.

7. Device according to claim 6, **characterised in that** said processing means (42, 44) are adapted for delivering a plurality of secondary reference signals ($Sr_1$ to $Sr_n$) which are piecewise affine functions of the reference signal (Sr), each secondary reference signal ($Sr_1$ to $Sr_n$) of a level ($30_{j,k}$) having at all times a value greater than or equal to the value of a secondary reference signal of a level which is closer to the voltage source ($1_1$ to $1_n$).

8. Device according to claim 6, **characterised in that** said monitoring means (34, 40, 42, 44) comprise means for generating a synchronisation signal (34) in order to deliver at the output a plurality of secondary synchronisation signals ($Sd_1$ to $Sd_p$), and means for transmitting each secondary synchronisation signal ($Sd_1$ to $Sd_p$) to all of the means of control ($28_{j,i,k}$) of the switching cells of the same row of all of the matrices ($12_1$ to $12_n$) of all of the blocks ($6_1$ to $6_n$) of the device.

9. Device according to one of claims 1 to 8, **characterised in that** it comprises a single switching block (6) and can be connected to a single input alternating voltage source (1), of which said neutral terminal (3) is accessible in order to allow a connection and which is connected to a single load (4) which forms an output alternating current source, and **in that** it further comprises a first capacitor (20) which can be connected between said neutral terminal (3) of said source (1) and an output terminal (5) of the load (4) and a second capacitor (22) which can be connected between the reference terminal (9) of said switching block (6) and the output terminal (5) of the load (4).

**10.** Device according to one of claims 1 to 8, **characterised in that** it comprises a single switching block (6) and can be connected to a single input alternating voltage source (1), of which said neutral terminal (3) is accessible in order to allow a connection and which is connected to a single load (4) which forms an output alternating current source, and **in that** it comprises a shift block (14) which comprises an input terminal (15) which is adapted for connection to said neutral terminal (3) of said source (1), a reference terminal (16) which is connected to the reference terminal (9) of the switching block (6) and an output terminal (17) which can be connected to the output terminal (5) of the load (4), said shift block (14) allowing the potential of the output terminal (17), which can be connected to an output terminal (5) of the load (4), to be modified.

**11.** Device according to one of claims 1 to 8, **characterised in that** it comprises a first and a second switching block $(6_1, 6_2)$ and can be connected to a single input alternating voltage source (1), of which said neutral terminal (3) is accessible in order to allow a connection and which is connected to a single load (4) which forms an output alternating current source, the reference terminals of the two switching blocks $(6_1, 6_2)$ being connected to each other, the first switching block $(6_1)$ being adapted for connection via the input terminal $(7_1)$ thereof to the supply terminal (2) of said source (1), the second switching block $(6_2)$ being adapted for connection via the input terminal $(7_2)$ thereof to the neutral terminal (3) of said source (1), said device further being adapted for connecting said load (4) between the output terminals $(10_1, 10_2)$ of the two switching blocks.

**12.** Device according to one of claims 9 to 11, **characterised in that** the means for permanently maintaining, at a constant sign or zero, the difference in potential between said input terminal $(7; 7_1, 7_2)$ and said reference terminal $(9; 9_1, 9_2)$ comprise inhibiting means $(13; 13_1, 13_2)$ which are connected to the switching block or each switching block $(6; 6_1, 6_2)$ and which comprise means for evaluating the sign of the difference in potential between said input terminal (7) and said neutral terminal (3) of the source (1), which evaluation means are adapted for delivering at the output a signal for inhibiting the switching block (6), and **in that** the switching block or each switching block $(6; 6_1, 6_2)$ is adapted for connecting together the input terminal $(7; 7_1, 7_2)$, the reference terminal $(9; 9_1, 9_2)$ and the output terminal $(10; 10_1, 10_2)$ thereof when said inhibiting signal is received.

**13.** Device according to claim 12, **characterised in that** said inhibiting means (13) are adapted for delivering said inhibiting signal when the difference in potential between said input terminal (7) and said neutral terminal (3) of the source (1) is negative, the switching matrix (12) further being formed by electronic components (52, 54) which are orientated so that said switching block supports only a positive voltage or zero voltage.

**14.** Device according to claim 12, **characterised in that** said inhibiting means (13) are adapted for delivering said inhibiting signal when the difference in potential between said input terminal (7) and said neutral terminal (3) of the source (1) is positive, the switching matrix (12) further being formed by electronic components (52, 54) which are orientated so that said switching block supports only a negative voltage or zero voltage.

**15.** Device according to one of claims 1 to 8, **characterised in that** it can be connected to at least two input alternating voltage sources $(1_1$ to $1_n)$, the neutral terminals $(3_1$ to $3_n)$ of which are all connected to each other and which are connected to the same number of loads $(4_1$ to $4_n)$ which form output alternating current sources and output terminals $(5_1$ to $5_n)$ of which are likewise all connected to each other, and **in that** it comprises a plurality of switching blocks $(6_1$ to $6_n)$, the reference terminals $(9_1$ to $9_n)$ of the switching blocks $(6_1$ to $6_n)$ all being connected to each other.

**16.** Device according to claim 15, **characterised in that** said neutral terminals $(3_1$ to $3_n)$ of said sources $(1_1$ to $1_n)$ are accessible in order to allow a connection, and **in that** it comprises a shift block (14) which comprises an input terminal (15) which is adapted for connection to said neutral terminals $(3_1$ to $3_n)$, a reference terminal (16) which is connected to all of the reference terminals $(9_1$ to $9_n)$ of the switching blocks $(6_1$ to $6_n)$ and an output terminal (17) which can be connected to all of the output terminals $(5_1$ to $5_n)$ of the loads $(4_1$ to $4_n)$ which form an output alternating current source, said shift block (14) allowing the potential of the output terminal (17), which can be connected to the output terminals $(5_1$ to $5_n)$ of the loads $(4_1$ to $4_n)$, to be modified.

**17.** Device according to one of claims 15 or 16, **characterised in that** the means for permanently maintaining, at a constant sign or zero, the difference in potential between said input terminal $(7_1$ to $7_n)$ and said reference terminal $(9_1$ to $9_n)$ comprise inhibiting means $(13_1$ to $13_n)$ which are connected to the switching block or each switching block $(6_1$ to $6_n)$ and which comprise means for comparing the difference in potential between the input terminals $(7_1$ to $7_n)$ and a terminal having a potential common to all of said switching blocks $(6_1$ to $6_n)$, such as the neutral terminals $(3_1$ to $3_n)$ of the sources $(1_1$ to $1_n)$, the output terminals $(5_1$ to $5_n)$ of the loads $(4_1$ to $4_n)$ or

the reference terminals ($9_1$ to $9_n$), which means are adapted for delivering at the output signals for inhibiting the switching blocks ($6_1$ to $6_n$), and **in that** the switching block or each switching block ($6_1$ to $6_n$) is adapted for connecting together the input terminal ($7_1$ to $7_n$), the reference terminal ($9_1$ to $9_n$) and the output terminal ($10_1$ to $10_n$) thereof when the inhibiting signal is received.

18. Device according to claim 17, **characterised in that** said inhibiting means ($13_1$ to $13_n$) are adapted for delivering an inhibiting signal only to the block in which the difference in potential between the input terminals ($7_1$ to $7_n$) and a terminal having a potential common to all of said switching blocks ($6_1$ to $6_n$), such as the neutral terminals ($3_1$ to $3_n$) of the sources ($1_1$ to $1_n$), the output terminals ($5_1$ to $5_n$) of the loads ($4_1$ to $4_n$) or the reference terminals ($9_1$ to $9_n$), is the weakest, the switching matrices ($12_1$ to $12_n$) further being formed by electronic components (52, 54) which are orientated so that said blocks ($6_1$ to $6_n$) support only a positive voltage or zero voltage.

19. Device according to claim 18, **characterised in that** said inhibiting means ($13_1$ to $13_n$) are adapted for delivering an inhibiting signal only to the block in which the difference in potential between the input terminals ($7_1$ to $7_n$) and a terminal having a potential common to all of said switching blocks ($6_1$ to $6_n$), such as the neutral terminals ($3_1$ to $3_n$) of the sources ($1_1$ to $1_n$), the output terminals ($5_1$ to $5_n$) of the loads ($4_1$ to $4_n$) or the reference terminals ($9_1$ to $9_n$), is the greatest, the switching matrices ($12_1$ to $12_n$) further being formed by electronic components (52, 54) which are orientated so that said blocks ($6_1$ to $6_n$) support only a negative voltage or zero voltage.

20. Device according to one of the above claims, **characterised in that** it is adapted for connection to three input alternating voltage sources ($1_1$ to $1_3$) which form the three phases of a three-phase electrical energy supply network.

21. Device according to claim 20, **characterised in that** each matrix ($12_1$, $12_2$ and $12_3$) of each switching block ($6_1$, $6_2$, $6_3$) comprises a single capacitor ($20_{j,i,k}$) and a single switching cell ($22_{j,i,k}$).

## Patentansprüche

1. Vorrichtung zur reversiblen Umwandlung von elektrischer Energie, die zwischen mindestens eine Eingangswechselspannungsquelle ($1_1$ bis $1_n$) und mindestens eine eine Ausgangswechselstromquelle ($4_1$ bis $4_n$) bildende Last ($4_1$ bis $4_n$) anschließbar ist, wobei jede Eingangswechselspannungsquelle ($1_1$ bis $1_n$) einen Versorgungsanschluss ($2_1$ bis $2_n$) und

einen neutralen Anschluss ($3_1$ bis $3_n$) aufweist, wobei die Vorrichtung mindestens eine Umschaltbaugruppe ($6_1$ bis $6_n$) aufweist, die angepasst ist, um einer Ausgangswechselstromquelle ($4_1$ bis $4_n$) zugeordnet zu werden und einen Eingangsanschluss ($7_1$ bis $7_n$), an den der Versorgungsanschluss ($2_1$ bis $2_n$) der Eingangswechselspannungsquelle ($1_1$ bis $1_n$) anschließbar ist, mindestens einen Referenzanschluss ($9_1$ bis $9_n$) und einen Ausgangsanschluss ($10_1$ bis $10_n$) umfasst, an den die die Ausgangswechselstromquelle ($4_1$ bis $4_n$) bildende Last anschließbar ist, wobei die Baugruppe ($6_1$ bis $6_n$) gleichfalls eine Umschaltmatrix ($12_1$ bis $12_n$) aufweist, die aus Kondensatoren ($20_{j,i,k}$) und aus Umschaltzellen ($22_{j,i,k}$) gebildet wird, wobei diese Zellen individuell durch Mittel ($28_{j,i,k}$) zur Steuerung ihrer Funktionsweise gesteuert werden, **dadurch gekennzeichnet, dass** die oder jede Umschaltbaugruppe ($6_1$ bis $6_n$) einen einzigen Referenzanschluss ($9_1$ bis $9_n$) aufweist, der auf einem Referenzpotential liegt, das unterschiedlich zu dem Potential des neutralen Anschlusses ($3_1$ bis $3_n$) der Quelle ($1_1$ bis $1_n$) ist, und dass sie Mittel ($13_1$ bis $13_n$, 50) zum ständigen Halten der Potentialdifferenz zwischen dem Eingangsanschluss ($7_1$ bis $7_n$) und dem Referenzanschluss ($9_1$ bis $9_n$) der oder jeder Umschaltbaugruppe ($6_1$ bis $6_n$) auf einem konstanten Vorzeichen oder Null aufweist.

2. Vorrichtung zur Umwandlung nach Anspruch 1, **dadurch gekennzeichnet, dass** die Matrix ($12_1$ bis $12_n$) der oder jeder Baugruppe ($6_1$ bis $6_n$) mindestens eine Stufe ($30_{j,1}$ bis $30_{j,n}$) aufweist, die mindestens eine Reihe ($32_{j,1}$ bis $32_{j,p}$) von Umschaltzellen ($22_{j,i,k}$) umfasst, die in einem Verhältnis von einer einzigen Umschaltzelle ($22_{j,i,k}$) für jede Stufe ($32_{j,1}$ bis $32_{j,p}$) einer selben Reihe ($30_{j,1}$ bis $30_{j,n}$) angeordnet sind, wobei jede Umschaltzelle ($22_{j,i,k}$) aus zwei einen Schalter ($24_{j,i,k}$, $26_{j,i,k}$) bildenden Elementen zusammengesetzt ist, die oder jede Stufe ($30_{j,1}$ bis $30_{j,n}$) zwei Schaltergruppen definieren, die in Reihe geschaltet sind, und die Umschaltmatrix ($12_1$ bis $12_n$) somit zwei Endschaltergruppen definieren, wobei jede Umschaltzelle ($22_{j,i,k}$) einem Kondensator ($20_{j,1,k}$) zugeordnet ist, der dimensioniert ist, um zwischen den entsprechenden Anschlüssen der zwei Schalter ($24_{j,i,k}$, $26_{j,i,k}$) jeder Umschaltzelle ($22_{j,i,k}$) eine Lastspannung gleich einem Bruchteil der Spannung der Eingangswechselspannungsquelle ($1_1$ bis $1_n$) aufrechtzuerhalten, der abhängig von ihrer Reihe zu dieser Quelle abnimmt, wobei die Kondensatoren ($20_{j,i,k}$) einer selben Reihe ($32_{j,1}$ bis $32_{j,p}$) in Reihe zwischen den zwei Schalterendgruppen verbunden sind.

3. Vorrichtung nach Anspruch 2, **dadurch gekennzeichnet, dass** alle Schalter ($24_{j,i,k}$, $26_{j,1,k}$), jeder Umschaltzelle ($22_{j,i,k}$) hinsichtlich der Spannung in eine Richtung arbeiten und hinsichtlich des Stroms in zwei Richtungen arbeiten.

4. Vorrichtung nach Anspruch 3, **dadurch gekennzeichnet, dass** alle Schalter ($24_{j,i,k}$, $26_{j,i,k}$) jeder Umschaltzelle ($22_{j,i,k}$) aus elektronischen Komponenten (52, 54) gebildet sind, die hinsichtlich der Spannung in eine Richtung arbeiten und hinsichtlich des Stroms in eine Richtung arbeiten.

5. Vorrichtung nach einem beliebigen der Ansprüche 2 bis 4, **dadurch gekennzeichnet, dass** alle Schalter ($24_{j,i,k}$, $26_{j,i,k}$) jeder Umschaltzelle ($22_{j,i,k}$) aus identischen elektronischen Komponenten (52, 54) gebildet sind und dass jeder Schalter aus identischen Elementarschaltern (50) besteht, die in Reihe geschaltet sind und deren Anzahl eine Funktion von der maximalen, an ihre Anschlüsse anlegbaren Spannung ist.

6. Vorrichtung nach einem beliebigen der Ansprüche 2 bis 4, **dadurch gekennzeichnet, dass** sie Mittel (34, 40, 42, 44) zur Regelung der Steuermittel ($28_{j,i,k}$) umfasst, die Mittel zur Bearbeitung (42, 44) eines Referenzsignals (Sr), um am Ausgang eine Mehrzahl von Sekundärreferenzsignalen ($Sr_1$ bis $Sr_n$) zu liefern, und Mittel zur Übertragung jedes Sekundärreferenzsignals an alle Steuermittel ($28_{j,i,k}$) der Umschaltzellen einer selben Stufe aller Matrizes ($12_1$ bis $12_n$) von allen Baugruppen ($6_1$ bis $6_n$) der Vorrichtung aufweisen.

7. Vorrichtung nach Anspruch 6, **dadurch gekennzeichnet, dass** die Mittel zur Bearbeitung (42, 44) ausgelegt sind, um eine Mehrzahl von Sekundärreferenzsignalen ($Sr_1$ bis $Sr_n$) zu liefern, die durch einen Teil des Referenzsignals (Sr) verfeinerte Funktionen sind, wobei jedes Referenzsekundärsignal ($Sr_1$ bis $Sr_n$) einer Stufe ($30_{j,k}$) zu jedem Zeitpunkt einen höheren Wert als oder einen Wert gleich dem Wert eines Referenzsekundärsignals einer näher an der Spannungsquelle ($1_1$ bis $1_n$) liegenden Stufe hat.

8. Vorrichtung nach Anspruch 6, **dadurch gekennzeichnet, dass** die Regelungsmittel (34, 40, 42, 44) Mittel zur Erzeugung eines Synchronisationssignals (34), um am Ausgang eine Mehrzahl von Sekundärsynchronisationssignalen ($Sd_1$ bis $Sd_p$) zu liefern, und Mittel zur Übertragung jedes Sekundärsynchronisationssignals ($Sd_1$ bis $Sd_p$) an alle Steuermittel ($28_{j,i,k}$) der Umschaltzellen einer selben Reihe von allen Matrizes ($12_1$ bis $12_n$) aller Baugruppen ($6_1$ bis $6_n$) der Vorrichtung umfasst.

9. Vorrichtung nach einem beliebigen der Ansprüche 1 bis 8, **dadurch gekennzeichnet, dass** sie eine einzige Umschaltbaugruppe (6) aufweist und an eine einzige Eingangswechselspannungsquelle (1) anschließbar ist, deren neutraler Anschluss (3) zugänglich ist, um eine Verbindung zu ermöglichen, und die einer einzigen Last zugeordnet ist, die eine Ausgangswechselstromquelle bildet, und dass sie darüber hinaus einen ersten Kondensator (20), der zwischen dem neutralen Anschluss (3) und der Quelle (1) anschließbar ist, und einen Ausgangsanschluss (5) der Last (4) und einen zweiten Kondensator (22), der zwischen dem Referenzanschluss (9) der Umschaltbaugruppe (6) und dem Ausgangsanschluss (5) der Last anschließbar ist, umfasst.

10. Vorrichtung nach einem beliebigen der Ansprüche 1 bis 8, **dadurch gekennzeichnet, dass** sie eine einzige Umschaltbaugruppe (6) umfasst und mit einer einzigen Eingangswechselspannungsquelle (1) verbindbar ist, deren neutraler Anschluss (3) zugänglich ist, um eine Verbindung zu ermöglichen, und die einer einzigen, eine Ausgangswechselstromquelle bildenden Last zugeordnet ist, und dass sie eine Verschiebungsbaugruppe (14) aufweist, die einen Eingangsanschluss (15), der angepasst ist, um mit dem neutralen Anschluss (3) der Quelle (1) verbunden zu werden, einen Referenzanschluss (16), der an den Referenzanschluss (9) der Umschaltbaugruppe (6) anschließbar ist, und einen Ausgangsanschluss (17), der mit dem Ausgangsanschluss (5) der Last (4) verbindbar ist, umfasst, wobei die Verschiebungsbaugruppe (14) die Modifizierung des Potentials des Ausgangsarischlusses (17), der an einen Ausgangsanschluss (5) der Last (4) anschließbar ist, ermöglicht.

11. Vorrichtung nach einem beliebigen der Ansprüche 1 bis 8, **dadurch gekennzeichnet, dass** sie eine erste und eine zweite Umschaltbaugruppe ($6_1$, $6_2$) umfasst und an eine einzige Eingangswechselspannungsquelle (1) anschließbar ist, deren neutraler Anschluss (3) zugänglich ist, um eine Verbindung zu ermöglichen, und die einer einzigen, eine Ausgangswechselstromquelle bildenden Last (4) zugeordnet ist, wobei die Referenzanschlüsse der zwei Umschaltbaugruppen ($6_1$, $6_2$) untereinander verbunden sind und die erste Umschaltbaugruppe ($6_1$) angepasst ist, um mit ihrem Eingangsanschluss ($7_1$) an den Versorgungsanschluss (2) der Quelle (1) angeschlossen zu werden, und die zweite Umschaltbaugruppe ($6_2$) angepasst ist, um mit ihrem Eingangsanschluss ($7_2$) an den neutralen Anschluss (3) der Quelle (1) verbunden zu werden, wobei die Vorrichtung darüber hinaus für die Verbindung der Last (4) mit den Ausgangsanschlüssen ($10_1$, $10_2$) der zwei Umschaltbaugruppen angepasst ist.

12. Vorrichtung nach einem beliebigen der Ansprüche 9 bis 11, **dadurch gekennzeichnet, dass** die Mittel zum ständigen Halten der Potentialdifferenz zwischen dem Eingangsanschluss (7; $7_1$, $7_2$) und dem

Referenzanschluss ($9$; $9_1$, $9_2$) auf einem konstanten Vorzeichen oder auf Null der oder jeder Umschaltbaugruppe ($6$; $6_1$, $6_2$) zugeordnete Sperrmittel ($13$; $13_1$, $13_2$) umfasst, die Mittel zur Auswertung des Vorzeichens der Potentialdifferenz zwischen dem Eingangsanschluss ($7$) und dem neutralen Anschluss ($3$) der Quelle ($1$) aufweisen, die angepasst sind, um am Ausgang ein Sperrsignal der Umschaltbaugruppe ($6$) zu liefern, und dass die oder jede Umschaltbaugruppe ($6$; $6_1$, $6_2$) angepasst ist, um gemeinsam ihren Eingangsanschluss ($7$; $7_1$, $7_2$), ihren Referenzanschluss ($9$; $9_1$, $9_2$) und ihren Ausgangsanschluss ($10$; $10_1$, $10_2$) bei dem Empfang des Sperrsignals zu verbinden.

**13.** Vorrichtung nach Anspruch 12, **dadurch gekennzeichnet, dass** die Sperrmittel ($13$) angepasst sind, um das Sperrsignal zu liefern, wenn die Potentialdifferenz zwischen dem Eingangsanschluss ($7$) und dem neutralen Anschluss ($3$) der Quelle ($1$) negativ ist, wobei die Umschaltmatrix ($12$) außerdem aus elektronischen Komponenten ($52$, $54$) gebildet ist, die derart orientiert sind, dass die Umschaltbaugruppe nur eine positive Spannung oder eine Spannung Null stützt.

**14.** Vorrichtung nach Anspruch 12, **dadurch gekennzeichnet, dass** die Sperrmittel ($13$) angepasst sind, um das Sperrsignal zu liefern, wenn die Potentialdifferenz zwischen dem Eingangsanschluss ($7$) und dem neutralen Anschluss ($3$) de Quelle ($1$) positiv ist, wobei die Umschaltmatrix ($12$) außerdem aus elektronischen Komponenten ($52$, $54$) gebildet ist, die derart orientiert sind, dass die Umschaltbaugruppe nur eine negative Spannung oder eine Spannung Null stützt.

**15.** Vorrichtung nach einem der Ansprüche 1 bis 8, **dadurch gekennzeichnet, dass** sie an mindestens zwei Eingangswechselspannungsquellen ($1_1$ bis $1_n$) anschließbar ist, deren neutrale Anschlüsse ($3_1$ bis $3_n$) alle untereinander verbunden sind und der gleichen Anzahl von Ausgangswechselstromquellen bildenden Lasten ($4_1$ bis $4_n$) zugeordnet sind und deren Ausgangsanschlüsse ($5_1$ bis $5_n$) gleichfalls alle untereinander verbunden sind und dass sie eine Mehrzahl von Umschaltbaugruppen ($6_1$ bis $6_n$) aufweist, wobei die Referenzanschlüsse ($9_1$ bis $9_n$) der Umschaltbaugruppen ($6_1$ bis $6_n$) alle untereinander verbunden sind.

**16.** Vorrichtung nach Anspruch 15, **dadurch gekennzeichnet, dass** die neutralen Anschlüsse ($3_1$ bis $3_n$) der Quellen ($1_1$ bis $1_n$) zugänglich sind, um eine Verbindung zu ermöglichen, und dass sie eine Verschiebungsbaugruppe ($14$) aufweist, die einen Eingangsanschluss ($15$), der angepasst ist, um an die neutralen Anschlüsse ($3_1$ bis $3_n$) angeschlossen zu werden, einen Referenzanschluss ($16$), der an die Gesamtheit der Referenzanschlüsse ($9_1$ bis $9_n$) der Umschaltbaugruppen ($6_1$ bis $6_n$) angeschlossen ist und einen Ausgangsanschluss ($17$), der an die Gesamtheit der Ausgangsanschlüsse ($5_1$ bis $5_n$) der eine Ausgangswechselstromquelle bildenden Lasten anschließbar ist, umfasst, wobei die Verschiebungsbaugruppe ($14$) die Modifizierung des Potentials des Ausgangsanschlusses ($17$) ermöglicht, der an die Ausgangsanschlüsse ($5_1$ bis $5_n$) der Lasten ($4_1$ bis $4_n$) anschließbar ist.

**17.** Vorrichtung nach einem beliebigen der Ansprüche 15 und 16, **dadurch gekennzeichnet, dass** die Mittel zum ständigen Halten der Potentialdifferenz zwischen dem Eingangsanschluss ($7_1$ bis $7_n$) und dem Referenzanschluss ($9_1$ bis $9_n$) auf einem konstanten Vorzeichen oder auf Null der oder jeder Umschaltbaugruppe ($6_1$ bis $6_n$) zugeordnete Sperrmittel ($13_1$ bis $13_n$) aufweisen, die Mittel zum Vergleich der Potentialdifferenz zwischen den Eingangsanschlüssen ($7_1$ bis $7_n$) und einem Potentialanschluss, der allen Umschaltbaugruppen ($6_1$ bis $6_n$) gemeinsam ist, umfassen, derart, dass die neutralen Anschlüssen ($3_1$ bis $3_n$) der Quellen ($1_1$ bis $1_n$), die Ausgangsanschlüsse ($5_1$ bis $5_n$) der Lasten ($4_1$ bis $4_n$) oder die Referenzanschlüsse ($9_1$ bis $9_n$) angepasst sind, um am Ausgang Sperrsignale der Umschaltbaugruppen ($6_1$ bis $6_n$) zu liefern, und dass die oder jede Umschaltbaugruppe ($6_1$ bis $6_n$) angepasst ist, um ihren Eingangsanschluss ($7_1$ bis $7_n$), ihren Referenzanschluss ($9_1$ bis $9_n$) und ihren Ausgangsanschluss ($10_1$ bis $10_n$) bei dem Empfang des Sperrsignals miteinander zu verbinden.

**18.** Vorrichtung nach Anspruch 17, **dadurch gekennzeichnet, dass** die Sperrmittel ($13_1$ bis $13_n$) angepasst sind, um ein Sperrsignal nur an die Baugruppe zu liefern, deren Potentialdifferenz zwischen den Eingangsanschlüssen ($7_1$ bis $7_n$) und einem Potentialanschluss, der allen Umschaltbaugruppen ($6_1$ bis $6_n$) gemeinsam ist, wie die neutralen Anschlüsse ($3_1$ bis $3_n$) der Quellen ($1_1$ bis $1_n$), die Ausgangsanschlüsse ($5_1$ bis $5_n$) der Lasten ($4_1$ bis $4_n$) oder die Referenzanschlüsse ($9_1$ bis $9_n$), die geringste ist, wobei die Umschaltmatrizes ($12_1$ bis $12_n$) außerdem aus elektronischen Komponenten ($52$, $54$) gebildet sind, die derart orientiert sind, dass die Baugruppen ($6_1$ bis $6_n$) nur eine positive Spannung oder eine Spannung null stützen.

**19.** Vorrichtung nach Anspruch 18, **dadurch gekennzeichnet, dass** die Sperrmittel ($13_1$ bis $13_n$) angepasst sind, um ein Sperrsignal nur der Baugruppe zu liefern, deren Potentialdifferenz zwischen den Eingangsanschlüssen ($7_1$ bis $7_n$) und einem Potentialanschluss, der allen Umschaltbaugruppen ($6_1$ bis $6_n$) gemeinsam ist, wie die neutralen Anschlüsse ($3_1$

bis $3_n$) der Quellen ($1_1$ bis $1_n$), die Ausgangsanschlüsse ($5_1$ bis $5_n$) der Lasten ($4_1$ bis $4_n$) oder die Referenzanschlüsse ($9_1$ bis $9_n$), die größte ist, wobei die Umschaltmatrizes ($12_1$ bis $12_n$) außerdem aus elektronischen Komponenten (52, 54) gebildet sind, die derart orientiert sind, dass die Baugruppen ($6_1$ bis $6_n$) nur eine negative Spannung oder eine Spannung null stützen.

20. Vorrichtung nach einem beliebigen der vorhergehenden Ansprüche, **dadurch gekennzeichnet, dass** sie angepasst ist, um an drei Eingangswechselspannungsquellen ($1_1$ bis $1_3$) angeschlossen zu werden, die drei Phasen eines dreiphasigen elektrischen Energieversorgungsnetzes bilden.

21. Vorrichtung nach Anspruch 20, **dadurch gekennzeichnet, dass** jede Matrix ($12_1$, $12_2$ und $12_3$) jeder Umschaltbaugruppe ($6_1$, $6_2$, $6_3$) einen einzigen Kondensator ($20_{j,i,k}$) und eine einzige Umschaltzelle ($22_{j,i,k}$) aufweist.

*FIG.1*

**FIG.2**

FIG.4

FIG.6

FIG.3

**FIG.5**

EP 1 410 488 B1

**FIG.7**

EP 1 410 488 B1

**FIG.8**

EP 1 410 488 B1

_FIG.9_

_FIG.10_

*FIG.11*

*FIG.12*

*FIG.13*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 0006786

**Littérature non-brevet citée dans la description**

• **D.-H.KWON ; D.-D.MIN ; J.-H.KIM.** Novel topologies of AC choppers. *IEE Proceedings on Electr. Power Appl.,* Juillet 1996, vol. 143 (4), 323-330